# EUROPÄISCHE PATENTSCHRIFT

(11) **EP 3 467 236 B1**
(45) Veröffentlichungstag und Bekanntmachung des Hinweises auf die Patenterteilung: **25.12.2019**
(21) Anmeldenummer: 17195043.9
(22) Anmeldetag: 05.10.2017
(51) Int. Cl.: E04H 12/10, F03D 13/20

(54) **TURM, INSBESONDERE FÜR EINE WINDENERGIEANLAGE**
TOWER, IN PARTICULAR FOR A WIND ENERGY FACILITY
TOUR D'ÉOLIENNE, EN PARTICULIER POUR UNE ÉOLIENNE

(43) Veröffentlichungstag der Anmeldung: 10.04.2019
(73) Patentinhaber: Notus Energy Plan GmbH & Co. KG, 14469 Potsdam (DE)
(72) Erfinder: Drieschner, Martin, 13086 Berlin (DE); Petryna, Yuriy, 12207 Berlin (DE); Köpke, Bodo, 13467 Berlin (DE); Steiner, Tilo, 18439 Stralsund (DE); Romer, Steve, 18437 Stralsund (DE); Grawe, Gunnar, 14482 Potsdam (DE)
(74) Vertreter: Pfenning, Meinig & Partner mbB

(56) Entgegenhaltungen:
- EP-A2- 2 067 915
- WO-A1-2005/040605
- WO-A1-2016/132056
- GB-A- 2 419 150
- JP-A- 2015 004 351

## Beschreibung

Die Erfindung betrifft einen Turm, insbesondere einen Turm für eine Windenergieanlage, umfassend einen oberen, rohrförmigen Turmabschnitt, ein Übergangsstück und einen unteren, beispielsweise gitterförmigen Turmabschnitt.

Typischerweise werden Türme für Onshore-Windenergieanlagen als Rohrtürme, insbesondere Stahlrohrtürme, ausgeführt. Diese Bauweise, auch Schalenbauweise genannt, hat den Vorteil, dass die Rohrtürme aus zusammenbaubaren Einzelteilen bestehen, sodass die einzelnen Turmbauteile transportierbar sind. Eine Transportabilität ist insbesondere hinsichtlich der Turmhöhe eine einschränkende Größe, da bei Turmhöhen von mehr als 120 m ein unterer Durchmesser des Rohrturms 4,3 m überschreiten würde. Durchmesser von mehr als 4,3 m sind jedoch nur schwer auf Straßen transportierbar, da Brücken über Landstraßen und Autobahnen häufig eine entsprechende maximale Durchfahrtshöhe aufweisen. Bekannte Onshore-Stahlrohrtürme sind somit ohne Zusatzmaßnahmen auf Turmhöhen von etwa 120 m begrenzt.

Hybridturmbauweisen sind aus dem Stand der Technik bekannt. Diese haben den Vorteil, dass die unteren, meist größere Durchmesser aufweisenden Turmabschnitte aus vergleichsweise günstigen und zusammenbaubaren Einzelteilen bestehen und eine Gittertragwerkstruktur bilden und die oberen Turmabschnitte als Stahlrohrturm ausgebildet sind. Diese Bauweise erfordert jedoch technisch komplexe Lösungen, insbesondere für einen Übergang zwischen der unteren, gitterförmigen Struktur auf die obere, rohrförmige Struktur. Vor allem bei Turmhöhen von über 120 m sind dabei im Wesentlichen nur Türme mit hohem Materialbedarf oder komplexem oder überdimensioniertem Aufbau bekannt, die insbesondere kostspielig in der Herstellung oder vergleichsweise schlecht transportabel sind.

Die DE 10 2010 015 761 A1 zeigt beispielsweise eine Standstruktur für eine Offshore-Windenergieanlage. Die Standstruktur umfasst einen Zentralpfeiler, Fußelementen und Radialstreben, die sich zwischen dem Zentralpfeiler und den Fußelementen erstrecken. Die Radialstreben sind über ihre gesamte Erstreckung konvex gebogen, was einen erheblichen Herstellungsaufwand und hohe Produktionskosten mit sich bringt. Die DE 10 2010 015 761 A1 scheint ferner keine Lösung für einen kraftflussoptimierten Übergang zu einem oberen Turmabschnitt zu liefern.

Die EP 2 067 915 A2 betrifft eine Gitterstruktur eines Offshore-Bauwerks, insbesondere einer Offshore-Windenergieanlage, mit miteinander an Knotenpunkten verbundenen Säulen und Streben, wobei die Knotenpunkte an den unteren Enden der Säulen als Fußknotenteile ausgebildet sind.

Die JP 2015 - 4351 A betrifft eine Gründung einer Offshore-Windturbinen-Generatoranlage, und ein Gründungsstrukturelement eines Offshore-Windturbinen-Generatorsystems. Das Offshore-Windturbinengeneratorsystem umfasst ein Turmrohr aus Stahl, eine Mehrzahl von diagonalen Elementen, die in einer Umfangsrichtung beabstandet an einer äußeren Umfangsfläche des Turmstahlrohrs angeordnet sind und sich von der äußeren Umfangsfläche nach unten radial nach außen erstrecken und mit einer Mehrzahl von Schenkeln verbunden sind, die eine Fachwerkstruktur bilden.

Die WO 2016/132056 A1 betrifft ein Verfahren zum Transportieren und Installieren einer Unterwasserstruktur auf dem Meeresboden, wobei die Unterwasserstruktur Schiffsausrüstung abstützen und verankern soll und eine offene Struktur aus Trägern und / oder Rohren aufweist, die zu einem Gitter zusammengebaut sind.

Die Druckschrift GB 2 419 150 A zeigt einen Stahlgussringknoten für eine Offshore-Windenergieanlage oder eine ähnliche Turmstützbasis, der eine oder mehrere Teilstumpfverlängerungen aufweist, die als halbkreisförmige Abschnittsvorsprünge derart geformt sind, dass rohrförmige Sekundärschenkel teils mit den Stümpfen und teils mit dem Hauptturm der Windenergieanlage verbunden sind. Dafür haben die Stumpfverlängerungen Gehrungsverbindungsenden in unterschiedlichen Winkeln.

Die WO 2005/040605 A1 zeigt eine Gründung für eine Offshore-Windenergieanlage, umfassend ein Lastverteilungselement, das den Turm der Windenergieanlage trägt. Die Windenergieanlage ist mit mehreren Gründungsbeinen versehen, die das Lastverteilungselement tragen und sich schräg nach außen erstrecken. Die Mittelachsen der Gründungsbeine schneiden die Kreisfläche, die vom Außendurchmesser des Turms umschrieben wird, in der Verbindungsebene des Lastverteilungselement mit dem Turm.

Angesichts des Stands der Technik liegt der Erfindung die Aufgabe zugrunde einen alternativen Turm vorzuschlagen, der einen sicheren Kraftfluss von einem oberen, rohrförmigen zu einem unteren, gitterförmigen Turmabschnitt ermöglicht und dabei vergleichsweise wirtschaftlich herstellbar ist.

Diese Aufgabe wird gelöst durch einen Turm gemäß dem Anspruch 1. Vorteilhafte Ausführungen und Weiterbildungen der Erfindung sind in den abhängigen Ansprüchen angeführt.

Der erfindungsgemäße Turm, insbesondere für eine Windenergieanlage, umfasst einen oberen, rohrförmigen Turmabschnitt und einen unteren, gitterförmigen Turmabschnitt. Der untere Turmabschnitt weist zumindest drei Tragglieder auf. Ferner weist der Turm ein den oberen Turmabschnitt mit dem unteren Turmabschnitt verbindendes Übergangsstück auf. Die Tragglieder sind im Wesentlichen um eine vertikale Längsachse, vorzugsweise drehsymmetrisch um die zentrale Längsachse, angeordnet. Dabei bedeutet "im Wesentlichen vertikal", dass die Tragglieder sich gegenüber einer horizontalen Gründung von unten nach oben erstrecken, dabei jedoch gegenüber einer vertikalen Längsachse, die orthogonal gegenüber der horizontalen Gründung ist, zumindest zwei Neigungswinkel aufweisen. Jedes der Tragglieder weist zumindest zwei gegenüber der Lotrechten geneigte Abschnitte auf. In einem ersten, oberen der Abschnitte schließen die Tragglieder mit der Lotrechten einen Winkel α ein. In einem zweiten, unteren der Abschnitte schließen die Tragglieder mit der Lotrechten einen Winkel β ein. Die Winkel werden so gemessen, dass jeweils der kleinste der Winkel, den das Tragglied mit der Lotrechten einschließt, der Winkel α bzw. β ist. Die Winkel α bzw. β sind also typischerweise spitze Winkel, also Winkel, die kleiner 90° sind. Betragsmäßig sind die Winkel α und β jeweils größer 0°. Der Winkel β ist kleiner als der Winkel α. Der Winkel α kann mindestens 30°, vorzugsweise mindestens 40° betragen. Der Winkel α kann höchstens 90° vorzugsweise höchstens 80°, besonders bevorzugt höchstens 70° betragen. Der Winkel β ist üblicherweise größer 0° und kleiner als der Winkel α. Vorzugsweise umfasst ein Tragglied an einer Oberkante sogenannte Verbindungsprofile, die unten ausführlich beschrieben sind.

Jedes der Tragglieder kann entlang seiner Erstreckung einen dritten gegenüber der Lotrechten geneigten Abschnitt aufweisen. Jedes der Tragglieder kann dabei mit der Lotrechten einen Winkel β¹ einschließen. Der zweite Abschnitt liegt typischerweise zwischen dem ersten und dem dritten Abschnitt. Der Winkel β¹ kann kleiner sein als der Winkel β. Lineare Traggliedabschnitte sind üblicherweise kostengünstiger fertigbar. Eine von der Längsachse aus betrachtete konvexe Traggliedkontur kann den Vorteil haben, dass Windlasten, insbesondere solche die an einem oberen Ende des Turms auftreten, besser in das Fundament geleitet werden können, indem beispielsweise Spannungsspitzen vermieden werden. Durch eine lineare Annäherung an eine konvexe Traggliedkontur können strukturelle Vorteile der konvexen Traggliedstruktur und wirtschaftliche Vorteile der linearen Tragglieder kombiniert werden.

Jedes der Tragglieder kann entlang seiner Erstreckung unterhalb des dritten Abschnitts zumindest einen weiteren, vorzugsweise n weitere gegenüber einer Lotrechten um einen Winkel β¹⁺ⁿ geneigte Abschnitte aufweisen. Die Winkel β¹⁺ⁿ können einen konvexen Verlauf der Außenkontur beschreiben. Der Winkel β¹⁺ⁿ kann dabei kleiner sein als der Winkel β¹⁺ⁿ⁻¹ des jeweils oberhalb an den weiteren Abschnitt angrenzenden Abschnitts. Der Winkel β¹⁺ⁿ liegt typischerweise in einem Abschnitt der unterhalb eines Abschnitts liegt, wobei letzter Abschnitt den Winkel β¹⁺ⁿ⁻¹ gegenüber der Lotrechten einschließt. Z.B. liegt ein Abschnitt mit dem Winkel β¹⁺ⁿ⁻¹ = β⁴ oberhalb eines Abschnitts mit dem Winkel β¹⁺ⁿ = β⁵. Bei diesem Beispiel ist n beispielsweise gleich 4 und der Winkel β⁵ ist kleiner als der Winkel β⁴. Ein Tragglied kann somit entlang seiner Erstreckung gegenüber einer Turmlängsachse konvexe Form aufweisen, die durch lineare Abschnitte angenähert ist. Die Abschnitte können entlang der länglichen Erstreckung der Tragglieder alternativ oder zusätzlich bereichsweise gekrümmte und damit echt konvexe Bereiche aufweisen.

Jedes der Tragglieder kann entlang seiner Erstreckung einen vierten gegenüber einer Lotrechten geneigten Abschnitt aufweisen. In dem vierten Abschnitt kann jedes der Tragglieder mit der Lotrechten einen Winkel γ einschließen. Der vierte Abschnitt kann oberhalb, vorzugsweise unmittelbar oberhalb des ersten Abschnitts liegen. Jedes der Tragglieder kann entlang seiner Erstreckung oberhalb des vierten Abschnitts zumindest einen weiteren, vorzugsweise n weitere gegenüber einer Lotrechten um einen Winkel γ¹⁺ⁿ geneigte Abschnitte aufweisen. Die Winkel γ¹⁺ⁿ können einen konkaven Verlauf der Außenkontur beschreiben. Der Winkel γ ¹⁺ⁿ kann dabei kleiner sein als der Winkel γ¹⁺ⁿ⁻¹ des jeweils unterhalb an den weiteren Abschnitt angrenzenden Abschnitts. Der Winkel γ¹⁺ⁿ liegt typischerweise in einem Abschnitt der oberhalb eines Abschnitts liegt, wobei letzter Abschnitt den Winkel γ¹⁺ⁿ⁻¹ gegenüber der Lotrechten einschließt. Z.B. liegt ein Abschnitt mit dem Winkel γ ¹⁺ⁿ⁻¹ = γ⁴ unterhalb eines Abschnitts mit dem Winkel γ¹⁺ⁿ = γ⁵. Bei diesem Beispiel ist n beispielsweise gleich 4 und der Winkel γ⁵ ist kleiner als der Winkel γ ⁴. Ein Tragglied kann somit entlang seiner Erstreckung gegenüber einer Turmlängsachse konkave Form aufweisen, die durch lineare Abschnitte angenähert ist. Die Abschnitte können entlang der länglichen Erstreckung der Tragglieder alternativ oder zusätzlich bereichsweise gekrümmte und damit echt konkave Bereiche aufweisen.

Der Winkel γ ist vorzugsweise kleiner als der Winkel α. So können die Tragglieder entlang ihrer länglichen Erstreckung einen Wendepunkt aufweisen. Dieser Wendepunkt kann beispielsweise durch drei von oben nach unten aufeinanderfolgende Abschnitte angenähert sein. Dabei ist die Anordnung der Abschnitt von oben nach unten: der vierte Abschnitt, der erste Abschnitt, der zweite Abschnitt. Der erste Abschnitt kann dabei den oben beschriebenen Winkel α aufweisen, der größer ist als der Winkel β. Der vierte Abschnitt kann den Winkel γ aufweisen, der ebenfalls kleiner ist als der Winkel α. Der Winkel γ kann vorzugsweise gleich oder kleiner dem Winkel β sein. Der Winkel γ kann größer 0° sein. Der vierte Abschnitt kann auch am oberen, rohrförmigen Turmabschnitt angeordnet sein. Vorzugsweise liegt der erste Abschnitt mit dem Neigungswinkel α dann im Bereich der Verbindungsprofile und der zweite Abschnitt mit dem Neigungswinkel β unterhalb der Verbindungsprofile. Der vierte Abschnitt kann auch im Bereich des Übergangsstücks angeordnet sein. Der vierte Abschnitt, der erste Abschnitt und der dritte Abschnitt können auch alle drei im Bereich der Verbindungsprofile angeordnet sein. Der vierte Abschnitt, der erste Abschnitt und der dritte Abschnitt können auch alle drei unterhalb der Verbindungsprofile angeordnet sein.

Typischerweise ist der obere Turmabschnitt als Schalentragwerk ausgebildet. Der untere Turmabschnitt ist üblicherweise als gitterförmiges Stabtragwerk ausgebildet. Schalentragwerke sind vergleichsweise günstig, können bei großen Durchmessern, die größer als etwa 4,3 m sind, jedoch nur unter großem Zusatzaufwand, z.B. durch Längsteilung der Segmente, transportiert werden. Stabtragwerke haben den Vorteil, dass große Strukturen aus vergleichsweise kleinen Einzelteilen zusammengesetzt werden können.

Die Tragstruktur wurde insbesondere für sehr große Nabenhöhen entwickelt und kann eine Nabenhöhe von mindestens 120 m, vorzugsweise mindestens 140 m, vorzugsweise mindestens 160 m und/oder maximal 300m aufweisen. Die Höhe wird vorzugsweise gemessen von einer Oberkante eines Fundaments bis zu einer Oberkante des oberen Turmabschnitts. Der Turm kann, insbesondere bei Offshore-Anwendungen, eine geringere Nabenhöhe aufweisen. Derartig hohe Nabenhöhen können insbesondere durch die besondere Form der Gitterstruktur des unteren Turmabschnitts und/oder durch das Übergangsstück und/oder durch ein unten beschriebenes Fundament realisiert werden. Bei derartigen Nabenhöhen treten typischerweise große Kräfte und Momente auf, denen der Turm standhalten muss. Selbstverständlich kann der Turm auch für andere Zwecke eingesetzt werden, beispielsweise als Freileitungsmast.

Die Höhe des unteren, gitterförmigen Turmabschnitts kann zumindest einem Dreifachen, vorzugsweise zumindest einem Vierfachen einer maximalen lateralen Ausdehnung des unteren, gitterförmigen Turmabschnitts entsprechen. Je nach Anlagenkonfiguration sind auch deutlich kleinere Verhältnisse möglich. Dies ist besonders vorteilhaft, um den oben beschriebenen hohen Belastungen bei hohen Turmhöhen standzuhalten. Die Höhe wird vorzugsweise gemessen von einer Oberkante eines Fundaments bis zu einer Unterkante des oberen, rohrförmigen Turmabschnitts. Es wurde herausgefunden, dass eine erfindungsgemäße Struktur, die deutlich breiter im Verhältnis zur Höhe ist, nicht zwangsläufig höheren Belastungen standhalten kann. Dies ist insbesondere auf unvorhersehbare Synergieeffekte zwischen dem Übergangsstück, der besonderen Außenkontur, der Gitterstruktur, den speziellen Wertebreichen der Gitterstruktur, der Tragglieder- und/oder Fundamentform zurückzuführen. Durch das oben beschriebene Verhältnis kann somit im Vergleich zum Stand der Technik insbesondere Material (und Flächenversiegelung) eingespart werden, hohe Nabenhöhen erreicht werden und sehr hohen Belastungen standgehalten werden.

Die Tragglieder können, beispielsweise in einem Querschnitt senkrecht zur Längsachse, an einer Unterkante der Verbindungsprofile des unteren Turmabschnitts einen radialen Abstand zur Längsachse von zumindest 4 m, vorzugsweise zumindest 8 m und/oder maximal 16 m aufweisen. Die Unterkante der Verbindungsprofile des unteren Turmabschnitts liegt vorzugsweise in der Höhe, in der zumindest eine entlang der zentralen Längsachse höchstliegende Querstrebe des unteren Turmabschnitts angeordnet ist. Die Querstrebe kann in ihrer länglichen Erstreckung im Wesentlichen parallel zu einer Horizontalen angeordnet sein. Die Unterkante der Verbindungsprofile des unteren Turmabschnitts weist typischerweise einen Abstand von mindestens 70 m zu einer Fundamentoberkante auf.

Die Tragglieder können in einem Querschnitt senkrecht zur Turmlängsachse an einer Unterkante des unteren Turmabschnitts einen radialen Abstand zur Längsachse von zumindest 5 m, vorzugsweise zumindest 10 m und/oder maximal 20 m aufweisen. Die Unterkante des unteren Turmabschnitts ist dabei vorzugsweise definiert durch diejenige Höhe entlang der zentralen Längsachse, in derer die Tragglieder an das Fundament angrenzen. Die Unterkante des unteren Turmabschnitts liegt typischerweise an der Oberkante des Fundaments, also an der Fundamentoberkante, an. Die zentrale Längsachse des Turms kann der Turmlängsachse entsprechen. Diese Anordnung der Tragglieder kann den Vorteil haben, dass die Tragglieder hohe Kräfte in das Fundament einleiten können. Derart können hohe Turmhöhen, die beispielsweise hohen Windlasten ausgesetzt sind, realisiert werden.

Der radiale Abstand an der Oberkante des unteren Turmabschnitts ist typischerweise kleiner als der radiale Abstand an der Unterkante des unteren Turmabschnitts.

In einer Ausführungsform kann der Turm ein Streifenfundament aufweisen. Ein Streifenfundament kann den Vorteil haben, dass eine Bodenfläche, die innerhalb des Streifenfundaments oder auch Linienfundaments liegt, nicht betoniert werden muss. So kann die vom Streifenfundament in Anspruch genommene Fläche beispielsweise die Flächenversiegelung und damit Ausgleichsmaßnahmen reduzieren. Durch das vorteilhafte Streifenfundament lassen sich im Vergleich zu konventionellen Fundamenten für Windkraftanlagen die Flächenversiegelungen um mehr als 40% reduzieren. Ferner kann durch ein Streifenfundament Material eingespart werden und somit Kosten gesenkt werden. Alternativ kann das Fundament auch, zur weiteren Kosteneinsparung oder zur besseren Zugänglichkeit der vom Fundament eingegrenzten Fläche, als Einzelfundamente ausgebildet sein. Die Anzahl der Einzelfundamente entspricht dabei vorzugsweise der Anzahl der Tragglieder. Fundamentausführungen als Flach- und/oder Tiefgründung sind möglich. Jedes der Traggliederkann durch das jeweilige Fundament abgestützt werden. Die kraft-, und reibschlüssige Verbindung zwischen den Traggliedern und dem Fundament kann in der für Maschinenfundamente typischen Weise erfolgen.

Das Linienfundament bzw. Streifenfundament kann eine Form eines Polygons oder eines Kreises aufweisen. Natürlich sind auch andere Fundamente, die nicht als Linienfundament ausgebildet sind, möglich.

Das Fundament, insbesondere das Linienfundament, kann eine radiale Ausdehnung von mindestens 9 m, vorzugsweise mindestens 12 m aufweisen. Die radiale Ausdehnung kann beispielsweise an der Fundamentoberkante senkrecht zur zentralen Längsachse gemessen werden. Die radiale Ausdehnung kann, beispielsweise bei einem kreisförmigen Linienfundament, einen äußeren Radius des Linienfundaments beschreiben.

Eine Unterkante des oberen Turmabschnitts korrespondiert üblicherweise mit einer Oberkante des Übergangsstücks. Die Unterkante des oberen Turmabschnitts ist typischerweise mit der Oberkante des Übergangsstücks, beispielsweise mittels einer Flanschverbindung, verbunden. Eine Unterkante des oberen Turmabschnitts, bzw. eine Oberkante des Übergangsstücks, ist typischerweise in einer Höhe entlang der Längsachse von mindestens 55 m über der Fundamentoberkante, vorzugsweise mindestens 80 m über der Fundamentoberkante, angeordnet.

Der Umkreisradius durch die Flächenschwerpunkte der Tragglieder am unteren Ende der Verbindungsprofile 8' beträgt mindestens 250 %, vorzugsweise mindestens 350 % des Umkreisradius der Schalenmittelfläche an der Unterkante des oberen rohrförmigen Turmquerschnitts.

Das Übergangsstück und/oder die Tragglieder können Bereiche aufweisen, die im Wesentlichen nach innen zur Längsachse gewölbt sind. Dies entspricht üblicherweise einer bereichsweisen konkaven Krümmung. Die Tragglieder, insbesondere die Verbindungsprofile, können zusätzlich oder alternativ nach außen, also sich von der zentralen Längsachse entfernend, gewölbt sein. Dies entspricht üblicherweise einer bereichsweisen konvexen Krümmung. Die konvexe und/oder die konkave Krümmung kann jeweils durch gerade Abschnitte angenähert werden, wie oben bereits beschrieben. Eine gekrümmte Form kann den Vorteil eines kontinuierlichen Kraftflusses haben. Spannungsspitzen und Kerbwirkungen kann so entgegengewirkt werden.

Die Tragglieder können wie bereits oben erwähnt Verbindungsprofile zum Verbinden der Tragglieder an das Übergangsstück aufweisen. Jedes der Verbindungsprofile kann in einem Querschnitt entlang einer Verbindungsprofillängsachse eine entlang einer länglichen Erstreckung von oben nach unten verlaufende, vorzugsweise stetige, Außenkontur mit einem Wendepunkt aufweisen. Dies kann insbesondere der Fall sein, wenn die Verbindungsprofile entlang ihrer Erstreckung eine konkave und konvexe Krümmung aufweisen. beispielsweise weisen die Verbindungsprofile entlang ihrer Erstreckung von oben nach unten zunächst einen konkaven und darauffolgend einen konvexen Bereich auf. Die Außenwand der Verbindungsprofile kann sowohl um die Verbindungsprofillängsachse gekrümmt sein als auch entlang der Verbindungsprofillängsachse. Die Verbindungsprofile können als konisches Rohr ausgebildet sein. Das konische Rohr kann sich nach unten verjüngen. Die Verbindungsprofile können auch einen gleichbleibenden Querschnitt aufweisen. Die Verbindungsprofile können auch einen Querschnitt aufweisen, der eine Form eines Mehrecks hat. Der Querschnitt der Verbindungsprofile kann auch konkave oder konvexe Bereiche aufweisen. Die Verbindungsprofile können auch an einer ersten Außenwand, die näher an der Turmlängsachse angeordnet ist eine gekrümmte Außenwand aufweisen und an einer Außenwand, die von der Turmlängsachse weiter entfernt angeordnet ist eine ebene Außenwand aufweisen, oder umgekehrt. Ferner kann die Verbindungsprofillängsachse einen Wendepunkt aufweisen. Die Verbindungsprofillängsachse ist typischerweise diejenige Linie, die die Mittelpunkte der Verbindungsprofilquerschnittsflächen verbindet. Die Querschnitte sind dabei beispielsweise senkrecht zur Verbindungsprofilaußenkontur bzw. senkrecht zu zumindest einer Verbindungsprofilaußenwand.

Der obere Turmabschnitt kann eine Höhe aufweisen, die zumindest der Länge eines Rotorblattdurchgangs entspricht. Die Länge eines Rotorblatts beträgt dabei vorzugsweise zumindest 54 m. Vorzugsweise reicht der untere Turmabschnitt unter den Rotorblattdurchgang. Das untere Ende der Verbindungsprofile 8' kann einen Abstand zum Rotorblattdurchgang von mindestens 6 m, vorzugsweise mindestens 8 m aufweisen.

Das Übergangsstück ist mit einem oberen rohrförmigen Turmabschnitt sowie mit den Verbindungsprofilen verbindbar. Zum Verbinden des Übergangsstücks mit dem oberen Turmabschnitt weist das Übergangsstück ein oberes Verbindungselement auf. Das obere Verbindungselement ist dabei beispielsweise als Flansch, vorzugsweise als Ringflansch, ausgebildet. Ferner weist das Übergangsstück eine sich nach oben kegelstumpfförmig aufweitende Mantelinnenfläche auf. Die kegelstumpfförmige Mantelinnenfläche kann entsprechend eine Mantelinnenfläche eines hohlen Kegelstumpfes sein, der zumindest bereichsweise eine Kegelstumpfmantelaußenfläche aufweisen kann. Der hohle Kegelstumpf kann dabei eine Tragstruktur des Übergangsstücks bilden. Vorzugsweise weist der obere Turmabschnitt, wie für Stahlrohrtürme üblich, einen Ringflansch auf. Die kegelstumpfförmige Mantelinnenfläche des Übergangsstücks ist typischerweise rotationssymmetrisch um eine Kegelstumpflängsachse angeordnet. Zumindest drei äußere Verbindungsflächen des Übergangsstücks sind im Wesentlichen rotationssymmetrisch um die Kegelstumpflängsachse an einer Außenseite des Übergangsstücks angeordnet. Vorzugsweise weist das Übergangsstück eine Mehrzahl von Kragen auf, die an der Außenseite des Übergangsstücks auskragen. Der Kragen kann dabei eine geschlossene Form aufweisen und beispielsweise einen Flansch in Form eines Rahmens bilden. Die Verbindungsfläche bildet dann eine Oberfläche des Kragens, bzw. Flanschs. Die Kragen sind vorzugsweise einstückig mit dem Übergangsstück ausgebildet. Dabei sind die äußeren Verbindungsflächen folglich Teil des Übergangsstücks. An den äußeren Verbindungsflächen ist das Übergangsstück mit je einem Verbindungsprofil des unteren Turmabschnitts verbindbar. Dazu können die Verbindungsprofile beispielsweise einen Flansch aufweisen, dessen Form mit der Form des Kragens, insbesondere mit den Verbindungsflächen, korrespondiert. Eine Oberfläche des Flansches des Verbindungsprofils ist an die Verbindungsfläche anlegbar und kann mit dieser, beispielsweise mittels Schweißverbindungen oder Schraubverbindungen, verbunden werden. Die Verbindungsprofile können an einer Oberseite ferner einen rahmenförmigen Flansch aufweisen, dessen Form mit dem Kragen des Übergangsstücks derart korrespondiert, sodass der rahmenförmige Flansch des Verbindungsprofils in den Kragen des Übergangsstücks, beispielsweise formschlüssig, einsteckbar ist. Ergänzend oder alternativ kann eine stoffschlüssige Verbindung vorgesehen sein. Die Verbindungsprofile können mit dem Übergangsstück auch mittels Schubknaggen verbindbar sein. Dabei kann der rahmenförmige Flansch die Schubknagge bilden.

Der obere rohrförmige Turmabschnitt kann beispielsweise als Stahlrohrturm, insbesondere als Schalentragwerk, ausgebildet sein. Das Übergangsstück kann zumindest bereichsweise als Schalentragwerk ausgebildet sein. Typischerweise ist das Übergangsstück überwiegend als Schalentragwerk ausgebildet. Das Übergangsstück kann eine Symbiose (oder vorteilhafte Verschmelzung/Kombination) aus Schalen- und Stabtragwerk sein.

Das Übergangsstück kann eine Begehungsöffnung aufweisen. So kann Montage- und Wartungspersonal in das Innere des Übergangsstücks gelangen. Eine Begehungsöffnung kann beispielsweise an einer Unterseite des Übergangsstücks vorgesehen sein. Dabei kann beispielsweise eine kreisrunde Grundfläche des Kegelstumpfes eine Ausnehmung aufweisen, die als Begehungsöffnung dienen kann. Ein Radius einer kreisrunden Begehungsöffnung kann nach DGUV Regel 113-004 Anhang 7, "Mindestanforderung für Zugang mit persönlicher Schutzausrüstung gegen Absturz" ausgelegt sein. Ein Radius beträgt vorzugsweise mindestens 300 mm. Ferner können Begehungsöffnungen in den Verbindungsprofilen und/oder in der kegelstumpfförmigen Mantelfläche vorgesehen sein. Jedes der Verbindungsprofile kann eine Begehungsöffnung aufweisen. So können Verbindungsbereiche, beispielsweise Schraubenflansche, zwischen dem Übergangsstück und den Verbindungsprofilen für Montage- und Wartungspersonal zugänglich sein.

Die Verbindungsflächen können an der Außenseite des Übergangsstücks auskragen. Dabei kann eine Mehrzahl von Kragen aus der Außenseite des Übergangsstücks herausragen und die Kragen können wenigstens drei, vorzugsweise jeweils geschlossene, hervorstehende Flansche in Form eines Rahmens bilden. Die Flansche können einen jeweiligen Bereich der Außenseite des Übergangsstückes vollständig oder teilweise einrahmen. Die Flansche können in einer Draufsicht verschiedene Formen aufweisen und beispielsweise dreieckig, rechteckig, quadratisch, kreisförmig, elliptisch, mehreckig sein oder auch eine Kombinationen dieser Formen als Flanschform aufweisen. Eine Oberfläche dieser jeweiligen Kragen, bzw. rahmenförmigen Flansche kann die jeweilige Verbindungsfläche bilden. Vorzugsweise korrespondiert die Form der Verbindungsfläche, wie oben beschrieben, mit einer Verbindungsfläche der Verbindungsprofile. Die Verbindungsprofile können beispielsweise durch Flanschverbindungen, Schubknaggen und/oder durch Schweißverbindungen mit dem Übergangsstück an den Verbindungsflächen verbunden werden.

Die Außenseite des Übergangsstücks weist zwischen den Verbindungsflächen typischerweise längliche Ausformungen auf. Die Ausformungen erstrecken sich vorzugsweise von einer Oberseite des Übergangsstücks bis zu einer Unterseite des Übergangsstücks. Vorzugsweise ist die Krümmung der Ausformungen kontinuierlich und weist insbesondere keine Kanten auf. So können Spannungsspitzen im Übergangstück vermieden werden. Über die Höhe des Übergangsstücks kann die Ausformung, auch Ausnehmung genannt, einen gleichbleibenden Ausnehmungskrümmungsradius aufweisen. Es ist auch möglich, dass der Krümmungsradius der Ausformung sich über die Höhe des Übergangsstücks ändert. Der Krümmungsradius ist dabei definiert als der Radius eines sogenannten Krümmungskreises, der die Form der Ausformung in einem Querschnitt zur Längsachse am besten annähert. Der Krümmungsradius kann mindestens 0,2 m betragen. Der Krümmungsradius kann auch mindestens 0,5 m betragen. Der Krümmungsradius beträgt typischerweise maximal 1 m. Bevorzugt beträgt der Krümmungsradius 0,5 m.

Das Übergangsstück kann einstückig ausgebildet sein. Dies kann beispielsweise den Vorteil haben, dass eine Stabilität erhöht und ein Montageaufwand verringert wird. Dennoch kann das Übergangsstück auch teilbar ausgeführt sein. In solch einem Fall sind die Einzelteile vorzugsweise verschraub- oder verschweißbar. Ferner sind formschlüssige Verbindungen zum Verbinden der Einzelteile denkbar. Mehrteilige Übergangsstücke können den Vorteil haben, dass maximale Abmaße nicht von Transportbedingungen, wie oben bereits erläutert, eingeschränkt werden.

Das Übergangsstück ist für Türme, die Onshore und/oder Offshore verwendet werden, geeignet. Bei einer Onshore-Anwendung weist das Übergangsstück typischerweise entlang einer Längsachse, vorzugsweise entlang der Kegelstumpfachse, eine Höhe von mindestens 2,5 m, vorzugsweise von mindestens 3 m auf. Das Übergangsstück kann ferner eine maximale Höhe entlang der Längsachse von 4,7 m, vorzugsweise von 4 m aufweisen. Dies hat den Vorteil, dass das Übergangsstück bereits zusammengebaut oder in einstückiger Ausführung vergleichsweise leicht transportierbar ist und auf Straßen und unter Brücken auf dem Landweg beförderbar ist. Bei einer Offshore-Anwendung kann die Höhe deutlich höher ausgeprägt sein, beispielsweise bis zu 7m.

In einer Ausführungsform kann das Übergangsstück eine Gesamthöhe entlang einer Längsachse aufweisen, die mindestens 50% eines Durchmessers des oberen Turmabschnitts entspricht. Der Durchmesser des oberen Turmabschnitts ist dabei üblicherweise der Durchmesser des oberen Turmabschnitts an einer Unterkante des oberen Turmabschnitts (ohne Ringflansche). Vorzugsweise kann die Gesamthöhe des Übergangsstücks mindestens 80% des Durchmessers des oberen Turmabschnitts entsprechen. Typischerweise entspricht die Gesamthöhe des Übergangsstücks maximal 150 % des Durchmessers des oberen Turmabschnitts. So können maximale Transportabmessungen eingehalten werden und gleichzeitig Spannungsspitzen in dem Übergangsstück und/oder in einem das Übergangsstück aufweisenden Turm vermieden werden. Das Übergangsstück kann insbesondere bei Offshore-Anwendungen deutlich größere Abmessungen aufweisen.

Für eine verbesserte Transportfähigkeit auf dem Landweg kann das Übergangsstück typischerweise senkrecht zur Längsachse eine laterale Ausdehnung von mindestens 3,5 m, vorzugsweise mindestens 4 m und/oder maximal 5,5 m, vorzugsweise maximal 4,5 m aufweisen. Dabei ist die größte laterale Ausdehnung üblicherweise an einer dem rohrförmigen Turmabschnitt zugewandten Oberseite. Die kleinste laterale Ausdehnung weist das Übergangsstück typischerweise an einer Unterseite, die dem unteren, gitterförmigen Turmabschnitt zugewandt ist, auf. Das Übergangsstück kann, insbesondere bei Offshore-Anwendungen, deutlich größere laterale Ausdehnungen aufweisen.

Ferner kann das Übergangsstück eine laterale Ausdehnung senkrecht zur Längsachse aufweisen, die in jeder Position entlang der Höhe des Übergangsstücks mindestens 0 % des Durchmessers des oberen Turmabschnitts, im Bereich des Verbindungselements zum oberen Turmabschnitt vorzugsweise mindestens 105 % des Durchmessers des oberen Turmabschnitts entspricht. Die maximale laterale Ausdehnung senkrecht zur Längsachse ist typischerweise in jeder Position entlang der Höhe des Übergangsstücks maximal 120 % des Durchmessers des oberen Turmabschnitts. Der Durchmesser des oberen Turmabschnitts ist dabei üblicherweise der Durchmesser des oberen Turmabschnitts an einer Unterkante des oberen Turmabschnitts. So kann eine gute Transportfähigkeit auf dem Landweg erreicht werden, insbesondere auch auf Straßen die eine lichte Breite von nur 5,5 m aufweisen.

Die Verbindungsprofile des unteren Turmabschnitts können einen oberen Abschnitt der Tragglieder bilden. Jedes Verbindungsprofil kann einen oberen Flansch aufweisen, dessen Oberfläche mit den Verbindungsflächen des Übergangsstücks derart korrespondiert, dass das jeweilige Verbindungsprofil an einer Oberkante an das Übergangsstück an die Verbindungsflächen anflanschbar ist. Das Verbindungsprofil kann ferner ein unteres Verbindungselement, beispielsweise einen unteren Flansch, aufweisen. Das untere Verbindungselement kann beispielsweise derart ausgebildet sein, dass es, vorzugsweise formschlüssig, stoffschlüssig und/oder kraftschlüssig, mit einem unteren Traggliedabschnitt verbindbar ist. Das Verbindungsprofil kann ein oberes, mit dem Übergangsstück verbindbares Profilelement und einen unteren Einsatz aufweisen. An einer Unterseite des Profilelements kann eine Einsatzausnehmung ausgebildet sein, die zumindest bereichsweise mit einer Außenkontur des Einsatzes derart korrespondieren kann, dass der Einsatz formschlüssig mit dem oberen Profilelement verbunden sein kann. Der Einsatz kann mit dem oberen Profilelement beispielsweise über eine oder mehrere Schweißverbindungen, vorzugsweise zumindest bereichsweise entlang der Einsatzausnehmung, verbunden sein. Typischerweise ist der Einsatz an seiner Unterseite mit einem unteren Traggliedabschnitt, vorzugsweise lösbar, verbindbar. Eine lösbare Verbindung, beispielsweise eine Schraubenverbindung, hat den Vorteil, dass das Übergangsstück und die Verbindungsprofile unabhängig voneinander transportiert werden können und an einem Einsatzort vergleichsweise einfach montiert werden können. Ein Querschnitt des Einsatzes kann vorzugsweise mit einem Querschnitt des unteren Traggliedabschnittes korrespondieren. So kann beispielsweise ein kontinuierlicher Kraftfluss erreicht werden, da ein Kraftversatz im Wesentlichen vermieden wird. Insbesondere kann der untere Turmabschnitt dabei eine Gitterstruktur aufweisen, die zumindest drei sich über die Länge des unteren Turmabschnitts erstreckende Tragglieder aufweist. Die Form des Einsatzes kann vorzugsweise derart mit einer Form eines oberen Endes der unteren Traggliedabschnitte korrespondieren, dass der Einsatz an seiner Unterseite auf das obere Ende der unteren Traggliedabschnitte auf- oder in das obere Ende einsteckbar ist. Der Einsatz und die unteren Traggliedabschnitte können ferner durch eine stoffschlüssige Verbindung, beispielsweise Schweißen, formschlüssige Verbindung, beispielsweise durch Ein- oder Aufstecken, und/oder kraftschlüssige Verbindungen, beispielsweise Flanschen, Schrauben, Nieten o.ä. verbunden sein. Der Einsatz und die unteren Traggliedabschnitte können zusätzlich oder alternativ mittels Schubknaggen verbunden sein. Ein unterer Traggliedabschnitt kann beispielsweise ein quadratisches Profil mit einer Kantenlänge von 800 mm und einer Wandstärke von 25 mm aufweisen. Vorzugsweise weist jedes Tragglied im unteren Traggliedabschnitt in einem Querschnitt senkrecht zu einer Traggliedlängsachse eine laterale Ausdehnung von mindestens 400 mm auf.

Eine Traggliedwandstärke beträgt im unteren Traggliedabschnitt typischerweise mindestens 10 mm, vorzugsweise mindestens 20 mm und/oder maximal 60 mm. Natürlich können auch die Tragglieder auch andere Profilformen, beispielsweise U-Profile, rechteckige oder runde Profile, aufweisen.

Der Einsatz kann die Aufgabe haben, einen kontinuierlichen Übergang von dem Profilelement auf den unteren Traggliedabschnitt zu gewährleisten. Der Einsatz hat vorzugsweise die Dimensionen des unten anschließenden unteren Traggliedabschnitts.

Die Verbindungsprofile können einen Querschnitt aufweisen, der sich entlang der Erstreckung der Verbindungsprofile, vorzugsweise kontinuierlich, ändert. Es kann vorgesehen sein, dass sich eine Querschnittsgröße und/oder eine Querschnittsform entlang der Erstreckung des Verbindungsprofils ändern. In einem Querschnitt weist ein Verbindungsprofil in einer Ausführungsform eine sich nach oben aufweitende dreieckige Form auf. Die obere Dreieckskante kann dabei konvex ausgeprägt sein. Die untere Ecke des Dreiecks kann abgerundet ausgebildet sein, vorzugsweise konkav ausgerundet. Die Seitenkanten des Dreiecks können gleich lang ausgeprägt sein oder unterschiedliche Längen aufweisen. Die obere, vorzugsweise konvex ausgebildete Kante kann in einer lateralen Ausdehnung länger sein als die seitlichen Kanten. Die Verbindungsprofile können in einem Querschnitt eine viereckige oder mehreckige Form aufweisen. Vorzugsweise weitet sich die Form in einem Querschnitt nach oben auf. Auch vier- oder mehreckige Querschnittsformen können konkave und/oder konvexe Bereiche aufweisen. Die Verbindungsprofile können als Schweißkonstruktion ausgebildet sein. Die Verbindungsprofile können zusammengeschweißte Wandbleche mit einer Wandstärke von mindestens 10 mm und/oder maximal 60 mm aufweisen. Die Wandbleche eines Verbindungsprofils können verschiedene Wandstärken aufweisen. Vorzugsweise nimmt eine Querschnittsfläche des Verbindungsprofils in einem Querschnitt senkrecht zu einer Längsachse des Verbindungsprofils entlang dieser Längsachse von oben nach unten ab. Dies hat den Vorteil, dass ein Kraftfluss optimiert sein kann und gleichzeitig nur so viel Material wie nötig verbaut ist. Dies kann zu Materialeinsparungen und damit zu Kosteneinsparungen führen. Die Verbindungsprofile weisen typischerweise eine Länge entlang ihrer Erstreckung von mindestens 1 m, vorzugsweise mindestens 8 m und/oder maximal 12 m auf. Insbesondere für Offshore-Anwendungen können die Verbindungsprofile auch eine Länge entlang ihrer Erstreckung von mehr als 12 m aufweisen.

Zumindest eine Wandung des Verbindungsprofils kann in einem Querschnitt senkrecht zu einer Längsachse des Verbindungsprofils zumindest bereichsweise eine konvex geformte Außenkontur aufweisen. Dadurch kann ein Kraftfluss vom oberen Turmabschnitt über das Übergangsstück in den unteren Turmabschnitt verbessert werden. Durch eine derartige Kraftflussoptimierung kann daraufhin Material eingespart werden.

Zumindest eine Wandung des Verbindungsprofils kann in einem Querschnitt senkrecht zu einer Längsachse des Verbindungsprofils zumindest bereichsweise eine konkav geformte Außenkontur aufweisen. Dadurch kann ein Kraftfluss vom oberen Turmabschnitt über das Übergangsstück in den unteren Turmabschnitt verbessert werden. Durch eine derartige Kraftflussoptimierung können Spannungsspitzen vermieden werden und Material eingespart werden.

Die zumindest eine Wandung des Verbindungsprofils kann in einem Querschnitt senkrecht zu einer Längsachse des Verbindungsprofils sowohl zumindest bereichsweise eine konkav geformte Außenkontur als auch zumindest bereichsweise eine konvex geformte Außenkontur aufweisen. Auch durch konkav gekrümmte Formen können Spannungsspitzen vermieden werden.

Die Wandung des Verbindungsprofils kann einfach oder mehrfach gekrümmt sein. Eine mehrfache Krümmung der Verbindungsprofile kann dabei insbesondere durch eine erste Krümmung, beispielsweise durch eine entlang der Längsachse konkave und/oder konvexe Ausbildung der Verbindungsprofile, in Kombination mit einer Krümmung senkrecht zur jeweiligen Längsachse der Verbindungsprofile, realisiert sein.

Um Material einzusparen, können die Verbindungsprofile vorzugsweise zumindest abschnittsweise hohl ausgebildet sein.

Insbesondere bei einer Offshore-Anwendung des Übergangsstücks können die Verbindungsprofile mit dem Übergangsstück einstückig ausgebildet sein. Die Verbindungsprofile können beispielsweise anstelle oder zusätzlich zu Flanschverbindungen von Flanschverbindungen mit dem Übergangsstück verschweißt sein.

Ausführungsbeispiele werden anhand der nachfolgenden Figuren näher erläutert.

Es zeigen:
- Fig. 1: einen Turm in einer schematischen Ansicht mit einem unteren gitterförmigen Turmabschnitt und einem oberen, rohrförmigen Turmabschnitt
- Fig. 2: den Turm in einer perspektivischen Ansicht mit einem unteren gitterförmigen Turmabschnitt und einem oberen, rohrförmigen Turmabschnitt, beispielhaft mit einem Kreisringfundament dargestellt;
- Fig. 3: einen Querschnitt entlang der Schnittgeraden AA der Figur 2,
- Fig. 4: eine beispielhafte Form eines ersten Übergangsbereichs und eines zweiten Übergangsbereichs, vorzugsweise für einen Turm entsprechend Fig. 1,
- Fig. 5: eine beispielhafte Ausprägung eines Tragglieds,
- Fig. 6: eine weitere beispielhafte Ausführung eines Tragglieds.
- Fig. 7: ein Übergangsstück in einer perspektivischen Ansicht,
- Fig. 8: das Übergangsstück in einer Seitenansicht in einer xz-Ebene,
- Fig. 9: das Übergangsstück in einer Draufsicht in einer xy-Ebene,
- Fig. 10: das Übergangsstück verbunden mit einem oberen Turmabschnitt und mit Verbindungsprofilen
- Fig. 11a -c: eines der Verbindungsprofile in drei verschiedenen Ansichten,
- Fig. 11d: eine Explosionszeichnung eines Verbindungsprofils mit einem Einsatz,
- Fig. 12: das Übergangsstück verbunden mit vier Verbindungprofilen,
- Fig. 13: einen oberen Turmabschnitt, der über das Übergangsstück mit dem unteren Turmabschnitt verbunden ist,
- Fig. 14: eine schematische Ansicht eines Querschnitts entlang der Kegelstumpflängsachse,
- Fig. 15: eine Detailansicht einer Verbindung zwischen dem Verbindungsprofil und dem unteren Traggliedabschnitt und/oder dem Übergangsstück
- Fig. 16: eine perspektivische Ansicht eines Verbindungsbereiches zwischen einem Verbindungsprofil dem unteren Traggliedabschnitt und/oder dem Übergangsstück.

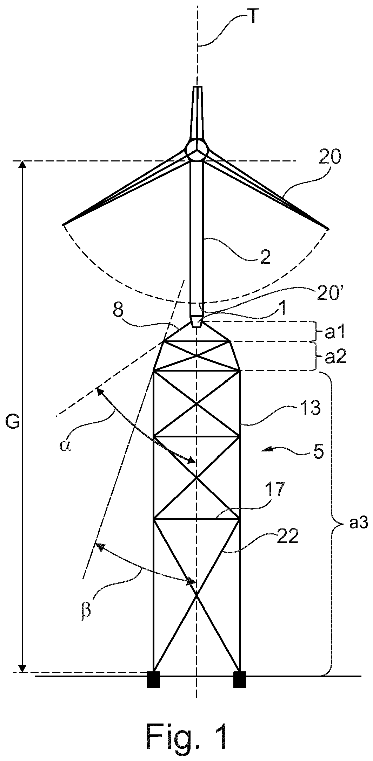

Figur 1 zeigt eine schematische Ansicht eines Turms für eine Windenergieanlage. Der Turm umfasst ein Übergangsstück 1, einen oberen Turmabschnitt 2, der rohrförmig als Schalentragwerk ausgebildet ist, und einen unteren Turmabschnitt 5, der gitterförmig, zumindest drei Tragglieder 13 aufweisend, als Stabtragwerk ausgebildet ist. Die Tragglieder 13 sind drehsymmetrisch um eine zentrale Turmlängsachse T angeordnet. Das Übergangsstück 1 ist zwischen dem oberen Turmabschnitt 2 und dem unteren Turmabschnitt 5 angeordnet. An dem oberen Turmabschnitt ist eine Rotornabe mit Rotorblättern 20 angeordnet. Ein Rotorblattdurchgang 20' liegt im oberen, rohrförmigen Turmabschnitt 2 oberhalb einer Oberkante des Übergangsstücks 1. Der Turm hat eine Gesamtturmhöhe G von 158 m. Jedes der Tragglieder 13 weist einen ersten, oberen Abschnitt a1 auf. In dem ersten, oberen Abschnitt a1 schließt jedes der Tragglieder 13 mit der Turmlängsachse einen Winkel α ein. Im Bereich des ersten Abschnitts a1 ist jedes der Tragglieder 13 als jeweils ein Verbindungsprofil 8 ausgebildet. Der Winkel α beträgt im dargestellten Ausführungsbeispiel 42°. Jedes der Tragglieder 13 weist einen zweiten, unterhalb des ersten Abschnitts a1 liegenden zweiten Abschnitt a2 auf. Im Abschnitt a2 schließt jedes der Tragglieder 13 mit der Turmlängsachse T einen Winkel β ein. Der Winkel β beträgt im gezeigten Ausführungsbeispiel 2,2° und ist damit kleiner als der Winkel α. Jedes der Tragglieder 13 weist in Figur 1 im unteren Teil 5' des unteren Turmabschnitts einen Neigungswinkel β¹ gegenüber der zentralen Turmlängsachse T von 0 ° auf, in anderen Ausführungen kann β¹ auch größer als 0° sein. Ein unterer Turmabschnitt 5' kann also geneigt gegenüber der Turmlangsachse T ausgeführt sein. Ferner können im unteren Turmabschnitt 5' mehrere Abschnitte angeordnet sein, die gegenüber der Turmlängsachse einen Neigungswinkel aufweisen. Vorzugsweise weist jeder Abschnitt im unteren Turmabschnitt 5' einen Neigungswinkel auf, der jeweils größer ist als ein Neigungswinkel, den das Tragglied im darunterliegenden Abschnitt mit der Turmlängsachse T einschließt. Der untere Turmabschnitt 5 weist Auskreuzungen 22 zur Verstärkung auf. Ferner weist der Turm Querstreben 17 auf. So kann der untere, gitterförmige Turmabschnitt ausgesteift werden. Der untere Turmabschnitt weist eine Stabtragwerkbauweise auf.

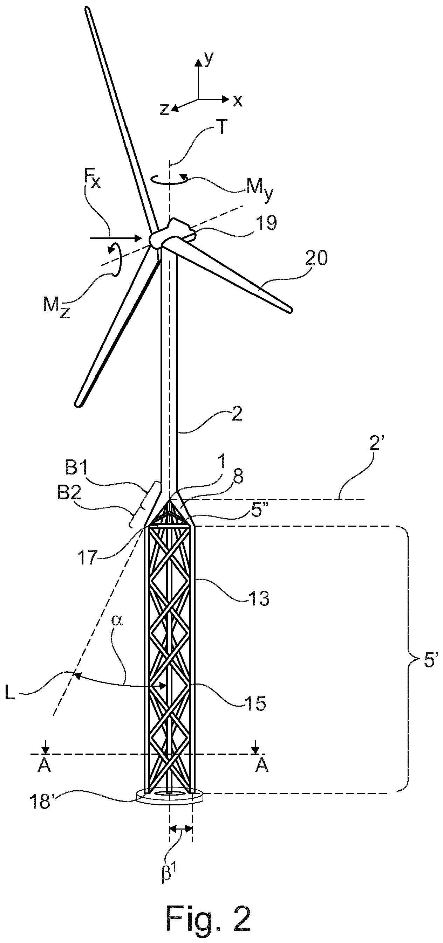

Figur 2 zeigt eine perspektivische Ansicht des Turms für eine Windenergieanlage, der im Wesentlichen dem der Figur 1 entspricht und sich in Details, die folgend beschrieben werden, vom Turm der Figur 1 unterscheidet. Jegliche Merkmale des in den folgenden Figuren gezeigten Türmen können auch auf den Turm 1 Anwendung finden, und umgekehrt. Ein erster Übergangsbereich B1 beschreibt den Übergang vom oberen Turmabschnitt 2 zum Übergangsstück 1. Ein zweiter Übergangsbereich B2 beschreibt den Übergang von einem oberen Teil der Tragglieder 13 - das Verbindungsprofil 8 - zu einem unteren Teil 5' des unteren Turmabschnitts 5. Der untere Turmabschnitt 5 weist zumindest drei Querstreben 17 auf. Am unteren Ende des Verbindungsprofils 8' des unteren Turmabschnitts 5 haben die Tragglieder 13 jeweils einen radialen Abstand senkrecht zur Längsachse von 8 m. Das untere Ende der Verbindungsprofile 8' weist einen Abstand zu einer Fundamentoberkante 18' eines Fundaments 18 von 80 m auf. Eine Unterkante des oberen Turmabschnitts hat einen Abstand von 90 m zur Fundamentoberkante 18'. Eine Windenergieanlage 19 ist an einer Oberseite des oberen Turmabschnitts angebracht. Eine Nabe eines Rotors der Windenergieanlage hat dabei einen Abstand zur Fundamentoberkante 18'von 160 m. Ein Rotorblatt 20 hat eine Länge von 65 m. An der Unterkante des unteren Turmabschnitts 5, also an der Fundamentoberkante 18', haben die Tragglieder einen radialen Abstand von 10 m zur zentralen Turmlängsachse T. Der obere, rohrförmige Turmabschnitt 2 hat einen Rohrdurchmesser von 4 m.

Der Turm ist derart ausgelegt, dass er nachfolgend aufgeführten Extremlasten auf Nabenhöhe standhält (Koordinatensystem entsprechend Fig. 2), wobei die beschriebene Extremlastkombination aus allen Richtungen auf das Tragwerk wirken kann, wofür das Koordinatensystem um die γ-Achse bzw. die zentrale Turmlängsachse T rotiert wird:
Fz = -1200kN;
Fy = -2000kN (Ersatzlast für Maschine, Gondel, Rotor,...);
My= +/- 9000 kNm;
Mx = +/- 7500 kNm

Das Gesamtgewicht des Turms, ohne das Fundament, beträgt 438 t. Die Gitterstruktur des unteren Turmabschnitts 5 weist Stahlprofile auf. Dabei wird ein Baustahl S 355 bevorzugt. Die Querstrebe 17 ist ein Rundprofil mit einem Durchmesser von 390 mm und einer Wandstärke von 17 mm. Die Tragglieder sind quadratische Hohlprofile. Die Tragglieder weisen entlang ihrer Erstreckung verschiedene Materialquerschnitte auf. So weist jedes Tragglied an der Fundamentoberkante 18' eine Profilkantenlänge von 793 mm auf und eine Wandstärke von 36 mm auf. In der Höhe der Oberkante 17 weist jedes Tragglied des gezeigten Beispiels dieselbe Profilkantenlänge von 793 mm aber eine Wandstärke von 25 mm auf. In anderen Ausführungsbeispielen kann über die Erstreckung der Tragglieder selbstverständlich die Profilkantenlänge und/oder die Wandstärke variieren. Vorzugsweise ist die Wandstärke der Tragglieder jedoch mindestens 20 mm und/oder maximal 60 mm. Die Tragglieder können auch runde Querschnitte aufweisen. Dabei können die Profildurchmesser den oben genannten Profilkantenlängen entsprechen.

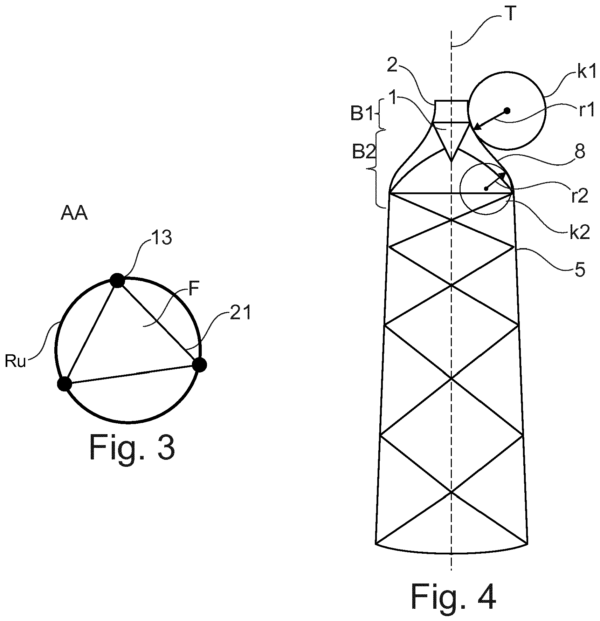

Die Figur 3 zeigt einen Schnitt AA des Turms der Figur 1, bzw. 2. Der Schnitt AA repräsentiert einen Querschnitt des unteren Turmabschnitts 5. Der Flächenschwerpunkt der Tragglieder 13 wird durch einen Umkreisradius Ru beschrieben. Der Umkreisradius Ru beträgt für das Ausführungsbeispiel am unteren Ende des Verbindungsprofils 8 m. Der Umkreisradius der Schalenmittelfläche an der Unterkante des oberen Turmabschnitts beträgt 2 m. Der Umkreisradius der Tragglieder 13 am unteren Ende der Verbindungsprofile 8'ist 4 mal so groß wie der Umkreisradius der Schalenmittelfläche an einem unteren Ende des oberen Turmabschnitts.

Figur 4 zeigt eine beispielhafte Form eines ersten Übergangsbereichs B1 und eines zweiten Übergangsbereichs B2, vorzugsweise für einen Turm entsprechend Fig. 1 bzw. 2. Der erste Übergangsbereich B1 weist eine gegenüber der zentralen Turmlängsachse T nach innen gekrümmte Fläche auf. Der obere Turmabschnitt 2 ist über das Übergangsstück 1 mit den Verbindungsprofilen 8 verbunden. Das Übergangsstück 1, die Verbindungsprofile 8 und die gitterförmige Struktur des unteren Turmabschnitts 5 sind nur schematisch angedeutet. Ein erster Krümmungsradius r1 beschreibt den Radius eines Kreises k1, der die konkave Form des ersten Übergangsbereichs B1 am besten annähert.

Der zweite Übergangsbereich B2 weist eine gegenüber der zentralen Turmlängsachse T nach außen gekrümmte Fläche auf. Die Verbindungsprofile 8 sind in diesem Beriech B2 mit dem unteren Turmabschnitt 5 verbunden. Ein Kreis k2 nähert die konvexe Krümmung des Übergangsbereichs B2 am besten an. Der Kreis k2 weist einen Krümmungsradius r2 auf.

Vorzugsweise ist der Krümmungsradius r1 größer als der Krümmungsradius r2. In einer technischen Ausführung werden die Krümmungsradien vorzugsweise durch gerade Elemente angenähert. Die Verbindungsprofile 8 können jedoch auch gewölbt ausgeführt werden.

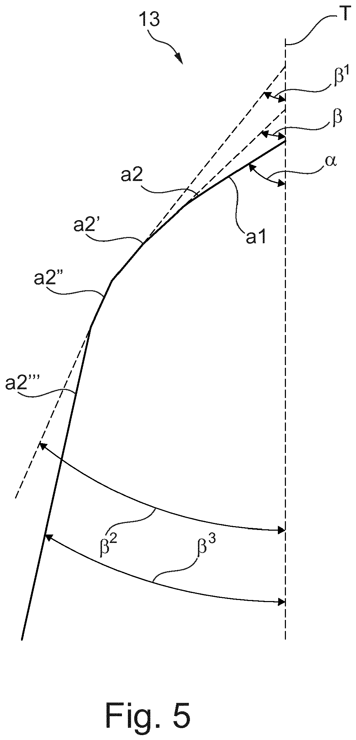

Figur 5 zeigt eine beispielhafte Ausführung eines Tragglieds 13. Das Tragglied 13 weist einen ersten, oberen Abschnitt a1 auf. In dem Abschnitt a1 schließt das Tragglied 13 mit der Turmlängsachse T einen Winkel α ein. In einem zweiten Abschnitt a2, der unterhalb des Abschnitts a1 liegt, schließt das Tragglied 13 einen Winkel β mit der Turmlängsachse T ein. Der Winkel β ist kleiner als der Winkel α. In einem weiteren Abschnitt a2' schließt das Tragglied einen Winkel β¹ mit der Turmlängsachse T ein. Der Winkel β¹ ist kleiner als der Winkel β. In einem unterhalb des Abschnitts a2' liegenden Abschnitt a2" schließt das Tragglied einen Winkel β² ein. Der Winkel β² ist kleiner als der Winkel β¹. In einem unterhalb des Abschnitts a2" liegenden Abschnitt a2''' schließt das Tragglied einen Winkel β³ ein. Der Winkel β³ ist kleiner als der Winkel β². Das Tragglied kann derart beispielsweise eine konvexe Krümmung mittels linearen Abschnitten annähern. Die Abschnitte a1, a2, a2'und/oder a2" können im Bereich des Verbindungsprofils 8 liegen. Sie können aber auch zumindest teilweise unterhalb des Verbindungsprofils angeordnet sein. Insbesondere der Abschnitt a1 ist typischerweise Teil des Verbindungsprofils.

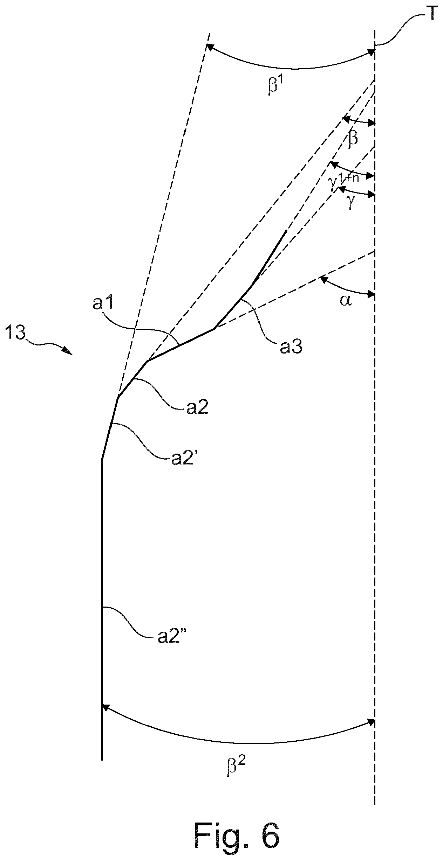

Figur 6 zeigt eine beispielhafte Ausführung eines Tragglieds 13. Das Tragglied 13 weist einen ersten, oberen Abschnitt a1 auf. In dem Abschnitt a1 schließt das Tragglied 13 mit der Turmlängsachse T einen Winkel α ein. In einem zweiten Abschnitt a2, der unterhalb des Abschnitts a1 liegt, schließt das Tragglied 13 einen Winkel β mit der Turmlängsachse T ein. Der Winkel β ist kleiner als der Winkel α. In einem weiteren Abschnitt a2' schließt das Tragglied einen Winkel β¹ mit der Turmlängsachse T ein. Der Winkel β¹ ist kleiner als der Winkel β. In einem unterhalb des Abschnitts a2' liegenden Abschnitt a2" schließt das Tragglied einen Winkel β² ein. Der Winkel β² ist kleiner als der Winkel β¹. Das Tragglied kann derart beispielsweise eine konvexe Krümmung mittels linearen Abschnitten annähern. Die Abschnitte a1, a2, a2'und/oder a2" können im Bereich des Verbindungsprofils 8 liegen. Sie können aber auch zumindest teilweise unterhalb des Verbindungsprofils angeordnet sein. Insbesondere der Abschnitt a1 ist typischerweise Teil des Verbindungsprofils.

Das Tragglied 13 weist ferner einen vierten Abschnitt a3 auf. Im Abschnitt a3 schließt das Tragglied mit der Turmlängsachse T einen Winkel γ ein. Der Winkel γ ist kleiner als der Winkel α. Auf dem Tragglied liegt damit ein Wendepunkt. Jedes der Tragglieder kann entlang seiner Erstreckung oberhalb des Abschnitts a3 zumindest einen weiteren Abschnitt a3' mit dem Winkel γ¹, vorzugsweise n weitere gegenüber einer Lotrechten um einen Winkel γ¹⁺ⁿ geneigte Abschnitte aufweisen. Der Winkel γ¹⁺ⁿ kann dabei kleiner sein als der Winkel γ¹⁺ⁿ⁻¹ des jeweils unterhalb an den weiteren Abschnitt angrenzenden Abschnitts. Das Tragglied kann somit entlang seiner Erstreckung gegenüber einer Turmlängsachse konkave Form aufweisen, die durch lineare Abschnitte angenähert ist. Die Abschnitte können entlang der länglichen Erstreckung der Tragglieder alternativ oder zusätzlich bereichsweise gekrümmte und damit echt konkave Bereiche aufweisen.

Im Übergang zwischen dem vierten Abschnitt a3 und dem ersten Abschnitt a1 nähert sich die Form des Tragglieds an eine konkave Krümmung an. Zwischen den Abschnitten a1, a2, a2' und a2" nähert sich die Form des Tragglieds einer konvexen Krümmung an. Die Abschnitte a3, a1 und a2' können alle Teil des Verbindungsprofils 8 sein. Das Verbindungsprofil 8 kann zusätzlich auch den Abschnitt a2" umfassen. Der Abschnitt a3 und n weitere Abschnitte oberhalb des Abschnitts a3 können Teil des Verbindungsprofils 8 und/oder Teil des Übergangsstücks 1 und/oder Teil des oberen Turmabschnitts 2 sein.

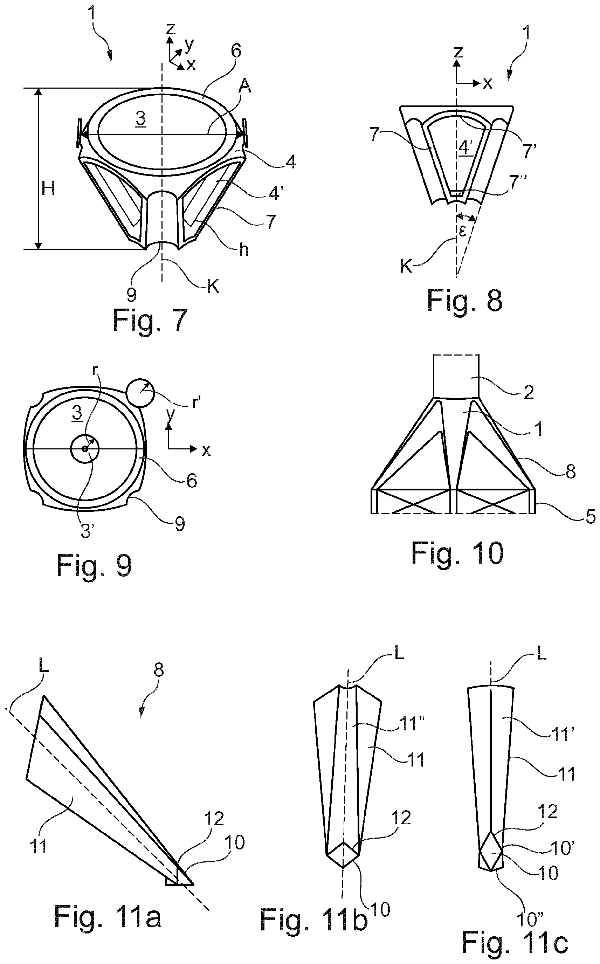

In Figur 7 ist das Übergangsstück 1 zum Verbinden des oberen Turmabschnitts 2 mit dem unteren Turmabschnitt 5 gezeigt. Das Übergangsstück 1 weist eine Mantelinnenfläche 3 auf, die sich kegelstumpfförmig nach oben, hier in z-Richtung, aufweitet. Die Mantelinnenfläche 3 weist eine glatte Oberfläche auf. Im gezeigten Beispiel hat ein hohler Kegelstumpf, der die Mantelinnenfläche 3 aufweist eine Wandstärke von 40 mm. An einem oberen Abschnitt des Übergangsstücks 1 weist das Übergangsstück 1 ein oberes Verbindungselement 6 auf. Hier ist das obere Verbindungselement 6 als Ringflansch ausgebildet, über den ein oberer rohrförmiger Turmabschnitt mit dem Übergangsstück 1 insbesondere durch Verschrauben und/oder Verschweißen verbindbar ist. Das Übergangsstück 1 ist um eine Kegelstumpflängsachse K drehsymmetrisch. Ferner weist das Übergangsstück 1 drehsymmetrisch um die Kegelstumpflängsachse K vier an einer Außenseite 4 angeordnete äußere Verbindungsflächen 7 auf. Die Verbindungsflächen 7 kragen aus der Außenseite 4 heraus. Vorzugsweise erstrecken sich die Verbindungsflächen 7 nahezu über die gesamte Höhe des Übergangsstücks 1. Die Verbindungsflächen 7 können einen Flansch bilden der sich im Wesentlichen von einem oberen Ende des Übergangsstücks 1 bis zu einem unteren Ende des Übergangsstücks 1 erstreckt. Die Verbindungsflächen 7 können mit korrespondierenden Anlageflächen des Verbindungsprofils 8 (vgl. Figuren 11a - 11d) verbunden werden. Dafür können die Verbindungsprofile 8 beispielsweise an das Übergangsstück 1 angeschraubt und/oder angeschweißt werden. Die Außenseite 4 des Übergangsstücks 1 weist zwischen den Verbindungsflächen 7 längliche Ausformungen 9 auf. Im gezeigten Beispiel erstrecken sich die Ausformungen 9 von einer Oberkante des Übergangsstücks 1 bis zu einer Unterkante des Übergangsstücks 1. In anderen Ausführungen können sich die Ausformungen auch nur bereichsweise von einer Oberkante zu einer Unterkante des Übergangsstücks erstrecken. Die Ausformungen 9 haben eine glatte Innenfläche ohne Kanten oder Vorsprünge, sodass Spannungsspitzen durch Kerbspannungen im Wesentlichen vermieden bzw. reduziert werden können. Die gezeigten Ausformungen 9 sind nach innen (konkav) in Richtung der Kegelstumpflängsachse K gekrümmt. Die Form der gezeigten Ausformung 9 der Figur 1 in einem Querschnitt senkrecht zur Kegelstumpflängsachse K kann dabei beispielsweise zumindest bereichsweise elliptisch oder kreisförmig sein. Die Außenkontur des Übergangsstücks in einem Querschnitt senkrecht zur Kegelstumpflängsachse K kann im Bereich der Ausformung beispielsweise auch eine parabolische Form beschreiben.

Das Übergangsstück kann beispielsweise aus Stahl (beispielsweise Baustahl S355) Stahlguss (beispielsweise Kugelgraphitguss), Stahlbeton, Faser-Kunststoff-Verbund bestehen oder Kombinationen daraus beinhalten. Typischerweise wird das Übergangsstück aus Stahl gefertigt. Dazu werden üblicherweise Einzelteile zugeschnitten, verformt und zusammengefügt. Typischerweise werden die Einzelteile mittels Schweißen zusammengefügt, alternative mögliche Fügeverfahren sind aber zum Beispiel auch Schrauben, Nieten und Kleben.

Das Übergangsstück 1 der Figur 7 weist eine maximale laterale Ausdehnung A von 4,8 m auf. Die Höhe H des Übergangsstücks 1 beträgt 3,5 m. Die Verbindungsfläche 7 kragt mit einer Kragenhöhe h von 20 cm bezüglich einer eingerahmten Außenseite 4' des Übergangsstücks aus. Die eingerahmte Außenseite 4' ist dabei diejenige Außenseite des Übergangsstücks, die von den auskragenden Verbindungsflächen 7 eingerahmt wird. Die eingerahmte Außenseite 4' kann dabei insbesondere die Form eines Bereiches einer äußeren Mantelfläche eines sich nach oben aufweitenden Kegelstumpfes aufweisen. Die eingerahmte Außenseite 4' kann dabei beispielsweise Bereiche einer äußeren Mantelfläche von einem Kegelstumpfes darstellen, der die Mantelinnenfläche 3 aufweist. Im Bereich der eingerahmten Außenseiten 4' hat die Mantelinnenfläche 3 eine Wandstärke von 40 mm.

Figur 8 zeigt eine Seitenansicht des Übergangsstücks 1 der Figur 7 in der xz-Ebene. Die Verbindungsflächen 7 liegen in Figur 2 in einer gegenüber der xz-Ebene geneigten Ebene, die mit der z-Achse einen Winkel ε einschließt. Die Verbindungsflächen 7 weisen an einer oberen Kante eine Ausrundung 7' auf und an einer unteren Kante eine Ausrundung 7". Die eingerahmte Außenfläche 4' ist von den auskragenden Verbindungsflächen 7 eingerahmt.

Figur 9 zeigt eine Draufsicht auf das Übergangsstück von oben in einer xy-Ebene. Dabei ist die Mantelinnenfläche 3 gut ersichtlich. Der Kegelstumpf, der die Mantelinnenfläche 3 aufweist, weist an einem unteren Ende eine Öffnung 3' auf. Die Form der Öffnung 3' entspricht dabei im Wesentlichen der unteren kreisrunden Grundfläche des Kegelstumpfes. Ein Radius r dieser kreisrunden Öffnung 3' entspricht im gezeigten Beispiel einem Radius r' der vier Ausformungen 9. In anderen Ausführungen kann der Radius r von dem Ausrundungsradius r' verschieden sein.

Figur 10 zeigt einen Ausschnitt eines Hybridturms mit einem oberen rohrförmigen Turmabschnitt 2, dem Übergangsstück 1 und einen unteren, gitterförmigen Turmabschnitt 5 mit Traggliedern, die in einem oberen Abschnitt als Verbindungsprofile 8 ausgebildet sind. Der obere Turmabschnitt 2 ist dabei mit dem Übergangsstück 1 über das obere Verbindungselement 6, hier als Ringflansch ausgebildet, mittels Schrauben verbunden. Ferner kann das Übergangsstück 1, insbesondere bei einem Einsatz des Übergangsstücks 1 in einem Turm der im Offshorebereich eingesetzt wird, an den Verbindungsflächen 7 mit den Verbindungsprofilen 8 durch Schweißverbindungen verbunden sein. Die Verbindungsprofile 8 wiederum sind an einer Unterseite mit dem unteren Abschnitt 5' der Tragglieder verbunden. Die Verbindungsprofile 8 sowie die Verbindung der Verbindungsprofile 8 mit dem unteren Abschnitt 5' der Tragglieder werden insbesondere in den folgenden Figuren näher erläutert.

Die Figuren11a bis 11c zeigen das Verbindungsprofil 8 aus verschiedenen Perspektiven. Figur 11a zeigt das Verbindungsprofil in einer perspektivischen Seitenansicht. Figur 11b zeigt das Verbindungsprofil 8 in einer Ansicht von unten, Figur 11c zeigt das Verbindungsprofil 8 in einer Ansicht von oben. Das Verbindungsprofil umfasst ein Profilelement 11 und einen Einsatz 10. An einer Unterseite des Profilelements kann eine Einsatzausnehmung angeordnet sein, die zumindest bereichsweise mit einer Außenkontur des Einsatzes korrespondieren kann. Der Einsatz kann so in das Profilelement passgenau eingesetzt und mit dem oberen Profilelement verbunden werden. Vorzugsweise kann der Einsatz zumindest bereichsweise entlang der Einsatzausnehmung mit dem oberen Profilelement verschweißt sein. Zusätzlich oder alternativ kann der Einsatz mittels Steckverbindungen, Schraubenverbindungen, Schnappverbindungen und/oder Klebverbindungen mit dem Profilelement verbunden sein Das Verbindungsprofil 8 ist vorzugsweise hohl ausgebildet. Insbesondere in der Draufsicht der Figur 5c wird deutlich, dass das Verbindungsprofil 8, hier insbesondere das Profilelement 11, des gezeigten Ausführungsbeispiels eine gekrümmte Wandung 11' umfasst, insbesondere eine um eine Längsachse L konvex gekrümmte Wandung. Ferner umfasst das Profilelement 11 auf der der konvex gekrümmten Wandung 11' gegenüberliegenden Seite eine konkav gekrümmte Wandung 11", also eine Ausrundung, auf. Das Profilelement 11 kann aber auch Seitenkanten aufweisen, die nicht gekrümmt sind, wie beispielsweise in Figur 5a ersichtlich ist. Ferner kann das Profilelement 11 entlang der Längsachse L gekrümmt sein und somit sowohl ebene, einfach als auch doppelt gekrümmte Wandungen aufweisen. Ein Querschnitt des Verbindungsprofils 8 senkrecht zur Längsachse L kann sich entlang seiner Erstreckung kontinuierlich ändern. Typischerweise nimmt eine Querschnittsfläche des Verbindungsprofils 8 senkrecht zur Längsachse L von oben nach unten ab. So kann Material eingespart werden, da dieses abhängig von der wirkenden Beanspruchung angeordnet wird. Dabei werden beispielsweise Windkräfte, die an einem oberen Ende des oberen Turmabschnitts angreifen, von dem oberen Turmabschnitt durch das Übergangsstück 1, durch die Verbindungsprofile 8, in den unteren Turmabschnitt 5 und weiter in eine Gründung eingeleitet. Der Einsatz 10 ist, wie oben erwähnt, an einer dem Profilelement 11 zugewandten Kontur des Einsatzes 10' vorzugsweise mit dem Profilelement 11 verschweißt. An einer Unterseite 10" des Einsatzes weist der Einsatz typischerweise eine Öffnung auf, in die ein unterer Traggliedabschnitt 5' einsteckbar ist. Vorzugsweise kann ein unterer Traggliedabschnitt 5' so mit dem Einsatz passgenau verbunden werden. Zusätzlich ist es vorteilhaft das Tragglied mit dem Einsatz durch eine Flanschverbindung, insbesondere durch verschraubte Flansche, lösbar mit dem Einsatz zu verbinden.

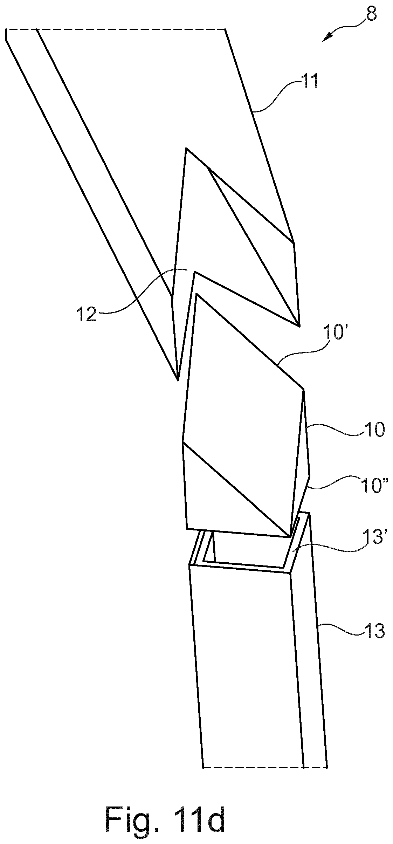

Die Figur 11d zeigt das Verbindungsprofil 8, der das obere Profilelement 11 und den Einsatz 10 aufweist, und das Tragglied 13 in einer Explosionszeichnung. Die Einsatzausnehmung 12 korrespondiert mit der dem Profilelement 11 zugewandten Kontur 10' des Einsatzes 10. Die Unterseite 10" des Einsatzes 10 ist mit dem unteren Traggliedabschnitt 5' verbindbar. Der Einsatz 10 weist dafür an seiner Unterseite 10" einen L-Flansch auf, der mit einem Traggliedflansch 13' korrespondiert. Eine derartige Verbindung ist in Figur 9 genauer beschrieben.

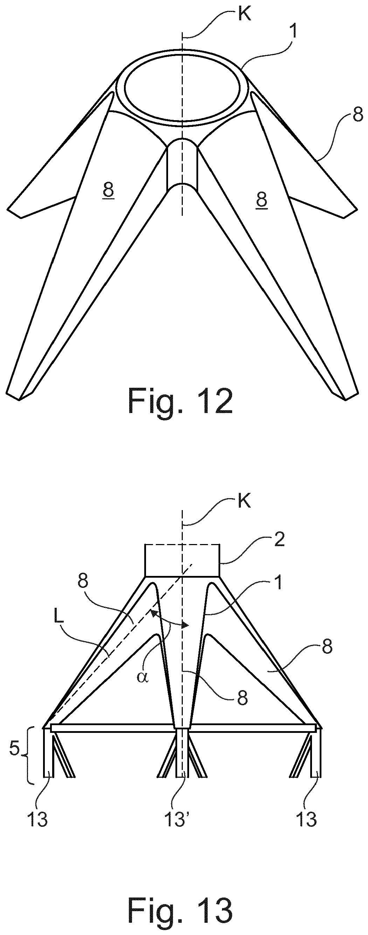

Figur 12 zeigt eine perspektivische Ansicht des Übergangsstücks mit vier Verbindungsprofilen 8. Im dargestellten Beispiel sind vier Verbindungsprofile drehsymmetrisch um die Kegelstumpflängsachse K angeordnet. In einem anderen Ausführungsbeispiel können auch nur drei oder mehr als vier Verbindungsprofile 8 um die Kegelstumpfachse K angeordnet sein. Die Figur 13 zeigt einen unteren Turmabschnitt 5, der vier Tragglieder 13 aufweist. Das vierte Tragglied ist in der Ansicht der Figur 7 durch das Tragglied 13' verdeckt. Die Anzahl der Tragglieder 13 und die Anzahl der Verbindungsprofile 8 stimmen stets überein, da jedes Verbindungsprofil 8 wie oben beschrieben Teil des jeweiligen Tragglieds 13 ist. Eine Längsachse L des Verbindungsprofils 8 schließt mit der Kegelstumpfachse K im gezeigten Beispiel einen Winkel α ein.

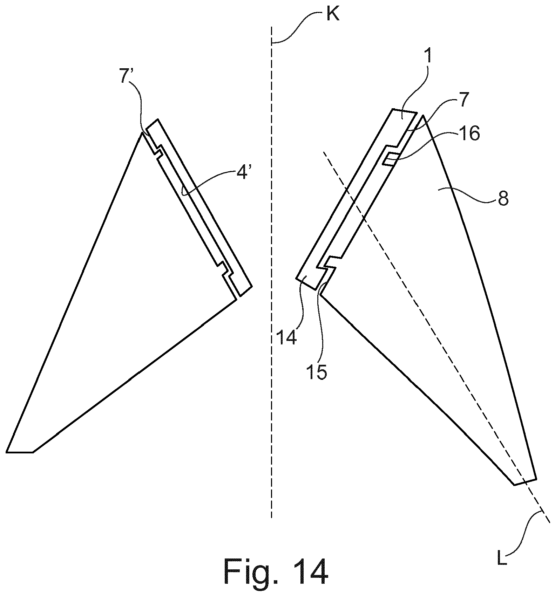

Figur 14 zeigt eine schematische Ansicht eines Querschnitts entlang der Kegelstumpflängsachse K eines Übergangsstücks 1, das im Wesentlichen dem der vorherigen Figuren entspricht. Vier Verbindungsprofile 8 sind mit dem Übergangsstück verbunden. Vier äußere Verbindungsflächen 7 des Übergangsstücks 1 sind im Wesentlichen rotationssymmetrisch um die Kegelstumpflängsachse K an einer Außenseite 4 des Übergangsstücks angeordnet. Das Übergangsstück weist vier Kragen 14 auf, die an der Außenseite 4 des Übergangsstücks 1 auskragen. Jeder Kragen 14 weist dabei eine geschlossene Form auf und bildet einen rahmenförmigen Flansch. Die Verbindungsfläche bildet dabei eine Oberfläche des Kragens 14, bzw. rahmenförmigen Flansch s. Die Kragen 14 sind einstückig mit dem Übergangsstück 1 ausgebildet. An den äußeren Verbindungsflächen 7 ist das Übergangsstück 1 mit je einem mit einem Verbindungsprofil 8 verbunden. Dazu weisen die Verbindungsprofile 8 einen Flansch 15 auf, dessen Form mit der Form des Kragens 14 korrespondiert. Eine Oberfläche des Flansches 15 des Verbindungsprofils 8 ist an die Verbindungsfläche 7 angelegt und ist mit dieser, beispielsweise mittels Schweißverbindungen (insbesondere bei Türmen, die Offshore eingesetzt werden) oder Schraubverbindungen (insbesondere bei Türmen, die Onshore eingesetzt werden), verbunden. Die Verbindungsprofile 8 weisen an einer Oberseite ferner einen rahmenförmigen Flansch 16 auf, dessen Form mit dem Kragen 14 des Übergangsstück derart korrespondiert, dass der Rahmen 16 des Verbindungsprofils 8 in den Kragen 14 des Übergangsstücks 1 passgenau eingesteckt ist.

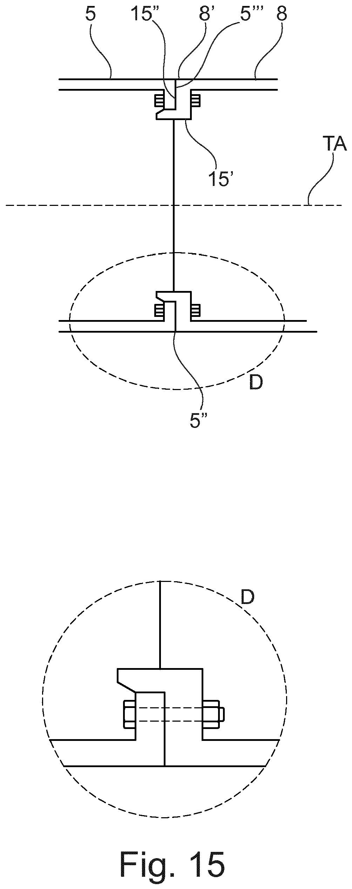

Figur 15 zeigt eine Detailansicht einer Verbindung zwischen dem unteren Traggliedabschnitt 5' des unteren Turmabschnitts 5, beispielsweise in Form eines Stabtragwerks, und dem Verbindungsprofil 8. Figur 15 kann auch eine Verbindung zwischen dem Verbindungsprofil 8 und dem Übergangsstück 1 abbilden. Der Übersichtlichkeit halber entsprechen die in Figur 15 eingepflegten Bezugszeichen denen einer Verbindung zwischen dem unteren Traggliedabschnitt 5' und dem Verbindungsprofil 8. Die Detailansicht ist in einem Querschnitt entlang einer Traggliedlängsachse TA dargestellt. Dabei weist das Verbindungsprofil 8 an seinem unteren Ende 8' eine nach innen auskragenden L-Flansch 15' auf. Der L-Flansch 15' kann beispielsweise an dem unteren Ende 10" des Einsatzes 10 angeordnet sein. Der L-Flansch 15' weist eine Anlagefläche 15" auf, an der ein korrespondierender Flansch 5'" des unteren Turmabschnitts 5 anliegt. Der Flansch 5'" ist am obersten Tragglied 13 des unteren Traggliedabschnitts 5' angeordnet. Durch die L-Form des L-Flanschs 15' ist das Verbindungsprofil 8 in den unteren Turmabschnitt 5 einsteckbar. Der L-Flansch 15' korrespondiert derart mit dem Flansch 5'" des unteren Traggliedabschnitts 5', dass der untere Turmabschnitt 5 mit dem Verbindungsprofil 8 reibschlüssig bspw. mittels einer Flanschverbindung, verbindbar ist. Ferner weisen der L-Flansch 15' und der Flansch 5'" koaxiale Bohrungen auf. Durch die koaxial korrespondierenden Bohrungen ist eine Schraube gesteckt, die mittels einer Mutter fixiert ist. So sind der untere Traggliedabschnitt 5' und das Verbindungsprofil 8 zusätzlich reibschlüssig verbunden. Die Detailansicht D zeigt diese Verbindung in einer Vergrößerung. Eine derartige Verbindung kann auch zwischen dem Übergangsstück 1 und dem Verbindungsprofil 8 vorgesehen sein. So kann das Übergangsstück 1 mit dem Verbindungsprofil form- und/oder reibschlüssig verbunden sein. Dafür weist das Verbindungsprofil 8 an seinem oberen Ende einen oben beschriebenen L-Flansch 15' auf und die Verbindungsflächen 7 des Übergangsstücks 1 bilden einen korrespondierenden Flansch, der dem Flansch 5'" der obigen Beschreibung im Wesentlichen entspricht.

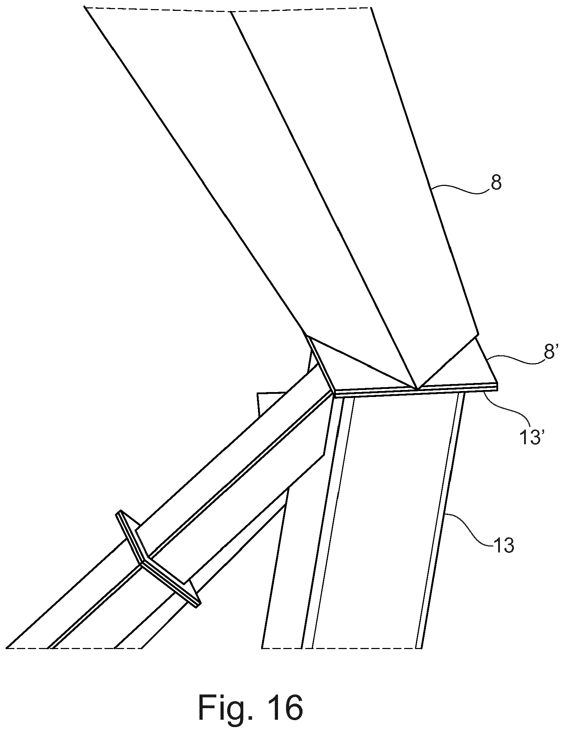

Fig. 16 zeigt in einer perspektivischen Ansicht einen unteren Bereich eines Verbindungsprofils 8, das mit einem unteren Abschnitt des Tragglieds 13 über eine Flanschverbindung verbunden ist. Das gezeigte Verbindungsprofil 8 weist keinen Einsatz 10 auf, kann in einer anderen Ausführung aber auch einen Einsatz 10 aufweisend ausgebildet sein. Das gezeigte Verbindungsprofil 8 weist an einem unteren Ende 8' einen Flansch in Form einer Bodenplatte auf. Dieser Flansch korrespondiert mit einem Traggliedflansch 13' am oberen Ende des unteren Traggliedabschnittes 5'. Der Flansch des Verbindungsprofils 8 liegt flächig auf dem Traggliedflansch 13' an. Die Flansche können beispielsweise mittels Schraubverbindungen verbunden sein.

### Bezugszeichenliste

- 1: Übergangsstück
- 2: Oberer rohrförmiger Turmabschnitt
- 2': Unterkante des Übergangsstücks
- 3: Mantelinnenfläche
- 3': Öffnung
- 4: Außenseite
- 4': eingerahmte Außenseite
- 5: Unterer gitterförmiger Turmabschnitt
- 5': Unterer Traggliedabschnitt
- 5''': Flansch an der Oberkante des unteren Turmabschnitts
- 6: Oberes Verbindungselement
- 7: Verbindungsfläche
- 7': Ausrundung an oberer Kante
- 7": Ausrundung an unterer Kante
- 8: Verbindungsprofil
- 8': unteres Ende des Verbindungsprofils
- 9: Längliche Ausnehmung
- 10: Einsatz
- 10': die dem Profilelement zugewandte Kontur des Einsatzes
- 10": Unterseite des Einsatzes
- 11: Profilelement
- 12: Einsatzausnehmung
- 13: Tragglied
- 13': Traggliedflansch
- 14: Kragen des Übergangsstücks
- 15: Verbindungsprofil-Flansch
- 15': L-Flansch des Verbindungsprofils
- 15": Anlagefläche des L-Flanschs
- 16: Rahmenförmiger Flansch
- 17: Querstrebe
- 18: Fundament
- 18': Fundamentoberfläche
- 19: Windenergieanlage
- 20: Rotorblatt
- 20': Rotorblattdurchgang
- 21: Verbindungslinien
- 22: Auskreuzungen

- A: laterale Ausdehnung des Übergangsstücks
- a1: erster, oberer Abschnitt
- a2: zweiter, unterer Abschnitt
- B1: erster Übergangsbereich
- B2: zweiter Übergangsbereich
- G: Gesamtturmhöhe
- H: Höhe des Übergangsstücks
- K: Kegelstumpflängsachse
- L: Verbindungsprofillängsachse
- T: zentrale Turmlängsachse
- TA: Traggliedlängsachse
- r1: Krümmungsradius des ersten Krümmungskreises
- r2: Krümmungsradius des zweiten Krümmungskreises
- Ru: Umkreisradius durch den Flächenschwerpunkt der Traggliedquerschnitte

- αⁱ, β^{j}, γ^{k}: Winkel zwischen Tragglied und Turmlängsachse, mit i, j, k Elementen N+
- ε: Winkel zwischen Verbindungsflächen und Kegelstumpflängsachse
- k1: erster Krümmungskreis für die konkave Außenkontur
- k2: zweiter Krümmungskreis für die konvexe Außenkontur
- h: Kragenhöhe
- r: Radius der Öffnung 3'

## Patentansprüche

1. Turm, insbesondere für eine Windenergieanlage, umfassend einen oberen rohrförmigen (2) und einen unteren gitterförmigen (5), zumindest drei Tragglieder (13) aufweisenden Turmabschnitt und ein den oberen Turmabschnitt (2) mit dem unteren Turmabschnitt (5) verbindendes Übergangsstück (1), wobei die Tragglieder (13) in einem oberen Traggliedabschnitt Verbindungsprofile (8) zum Verbinden der Tragglieder (13) an das Übergangsstück aufweisen und die Tragglieder (13) im Wesentlichen um eine vertikale Turmlängsachse (T), vorzugsweise drehsymmetrisch, angeordnet sind, wobei jedes der Tragglieder (13) zumindest zwei gegenüber der Lotrechten geneigte Abschnitte aufweist und in einem ersten, oberen der Abschnitte (a1) mit der Lotrechten einen Winkel α einschließt, in einem zweiten, unteren der Abschnitte (a2) mit der Lotrechten einen Winkel β einschließt und der Winkel β kleiner ist als der Winkel α, und wobei das Übergangsstück (1) zum Verbinden des oberen Turmabschnitts mit dem unteren Turmabschnitt ein oberes Verbindungselement (6) zum Verbinden des Übergangsstücks (1) mit dem oberen Turmabschnitt (2) aufweist,
**dadurch gekennzeichnet, dass**
das Übergangsstück (1) zum Verbinden des oberen Turmabschnitts mit dem unteren Turmabschnitt,
eine sich nach oben kegelstumpfförmig aufweitende Mantelinnenfläche (3) aufweist und
zumindest drei im Wesentlichen rotationssymmetrisch um eine Kegelstumpflängsachse an einer Außenseite (4) des Übergangsstücks (1) angeordnete äußere Verbindungsflächen (7) umfasst, an denen das Übergangsstück (1) mit je einem der Tragglieder (13) verbunden ist, wobei sich ein Querschnitt eines jeden der Verbindungsprofile (8) entlang einer länglichen Erstreckung entlang einer Verbindungsprofillängsachse (L) des Verbindungsprofils (8) kontinuierlich ändert.

2. Turm nach Anspruch 1, **dadurch gekennzeichnet, dass** jedes der Tragglieder (13) entlang seiner Erstreckung einen dritten gegenüber einer Lotrechten geneigten Abschnitt (a2') aufweist, in dem jedes der Tragglieder (13) mit der Lotrechten einen Winkel β¹ einschließt, wobei der zweite Abschnitt (a2) zwischen dem ersten (a1) und dem dritten Abschnitt (a2') liegt und der Winkel β¹ kleiner ist als der Winkel β.

3. Turm nach Anspruch 2, **dadurch gekennzeichnet, dass** jedes der Tragglieder (13) entlang seiner Erstreckung unterhalb des dritten Abschnitts (a2') zumindest einen weiteren, vorzugsweise n weitere gegenüber einer Lotrechten um einen Winkel β¹⁺ⁿ geneigte Abschnitte aufweist, wobei der Winkel β¹⁺ⁿ kleiner ist als der Winkel β¹⁺ⁿ⁻¹ des jeweils oberhalb an den weiteren Abschnitt angrenzenden Abschnitts.

4. Turm nach Anspruch 3, **dadurch gekennzeichnet, dass** jedes der Tragglieder (13) entlang seiner Erstreckung einen vierten gegenüber einer Lotrechten geneigten Abschnitt aufweist, in dem jedes der Tragglieder (13) mit der Lotrechten einen Winkel γ einschließt, wobei der vierte Abschnitt oberhalb, vorzugsweise unmittelbar oberhalb des ersten Abschnitts (a1) liegt und der Winkel γ kleiner ist als der Winkel α.

5. Turm nach Anspruch 4, **dadurch gekennzeichnet, dass** jedes der Tragglieder (13) entlang seiner Erstreckung oberhalb des vierten Abschnitts zumindest einen weiteren, vorzugsweise n weitere gegenüber einer Lotrechten um den Winkel γ¹⁺ⁿ geneigte Abschnitte aufweist, wobei der Winkel γ¹⁺ⁿ kleiner ist als ein Winkel γ¹⁺ⁿ⁻¹ eines jeweils unterhalb an den weiteren Abschnitt angrenzenden Abschnitts.

6. Turm nach einem der vorhergehenden Ansprüche, **dadurch gekennzeichnet, dass** der Turm eine Gesamthöhe (G) von mindestens 120 m, vorzugsweise mindestens 140 m, vorzugsweise mindestens 160 m aufweist.

7. Turm nach einem der vorhergehenden Ansprüche, **gekennzeichnet dadurch, dass** die Höhe des unteren, gitterförmigen Turmabschnitts (5) zumindest einem Dreifachen, vorzugsweise zumindest einem Vierfachen einer maximalen lateralen Ausdehnung des unteren, gitterförmigen Turmabschnitts entspricht.

8. Turm nach einem der vorhergehenden Ansprüche **dadurch gekennzeichnet, dass** die Tragglieder (13) in einem oberen Traggliedabschnitt Verbindungsprofile (8) zum Verbinden der Tragglieder (13) an das Übergangsstück (1) aufweisen, wobei jedes der Verbindungsprofile (8) an einer Unterkante einen radialen Abstand zur Turmlängsachse von zumindest 4 m, vorzugsweise zumindest 8 m und/oder maximal 16 m aufweisen.

9. Turm nach einem der vorhergehenden Ansprüche, **gekennzeichnet dadurch, dass** ein radialer Abstand der Tragglieder (13) zu einer Turmlängsachse (T) an einer Unterkante des unteren, gitterförmigen Turmabschnitts zumindest 5 m, vorzugsweise zumindest 10 m und/oder maximal 20 m beträgt.

10. Turm nach einem der vorhergehenden Ansprüche, **dadurch gekennzeichnet, dass** ein Umkreisradius (Ru) durch Schwerpunkte der Traggliedsquerschnittsflächen an einem unteren Ende der Verbindungsprofile (8') mindestens 250%, vorzugsweise mindestens 350% eines Umkreisradius einer Schalenmittelfläche an einer Unterkante des oberen, rohrförmigen Turmquerschnittes beträgt.

11. Turm nach einem der vorhergehenden Ansprüche, **dadurch gekennzeichnet, dass** der Turm ein Streifenfundament (18) und/oder Einzelfundamente, die jeweils zentrisch unterhalb der Tragglieder (13) angeordnet werden, aufweist.

12. Turm nach Anspruch 11, **dadurch gekennzeichnet, dass** das Streifenfundament (18) eine radiale Ausdehnung von mindestens 9 m, vorzugsweise mindestens 12 m aufweist.

13. Turm nach einem der vorhergehenden Ansprüche, **dadurch gekennzeichnet, dass** der obere Turmabschnitt (2) als Schalentragwerk und/oder der untere Turmabschnitt (5) als Stabtragwerk ausgebildet ist.

14. Turm nach einem der vorhergehenden Ansprüche, **dadurch gekennzeichnet, dass** das Übergangsstück (1) an der Außenseite (4) zwischen den Verbindungsflächen (7) längliche Ausformungen (9) aufweist, die sich vorzugsweise von einer Oberseite des Übergangsstücks (1) bis zu einer Unterseite des Übergangsstücks (1) erstrecken.

15. Turm nach einem der vorhergehenden Ansprüche, **dadurch gekennzeichnet, dass** das Übergangsstück (1) einstückig ausgebildet ist.

16. Turm nach einem der vorhergehenden Ansprüche, **dadurch gekennzeichnet, dass** der Querschnitt eines jeden der Verbindungsprofile (8) entlang einer länglichen Erstreckung entlang einer Verbindungsprofillängsachse (L) des Verbindungsprofils (8) von oben nach unten abnimmt.

17. Turm nach einem der vorhergehenden Ansprüche, **dadurch gekennzeichnet, dass** die Tragglieder (13) in einem oberen Traggliedabschnitt Verbindungsprofile (8) zum Verbinden der Tragglieder (13) an das Übergangsstück aufweisen, wobei jedes der Verbindungsprofile (8) in einem Querschnitt entlang einer Verbindungsprofillängsachse (L) eine entlang einer länglichen Erstreckung von oben nach unten verlaufende, vorzugsweise stetige, Außenkontur mit einem Wendepunkt aufweist.

## Claims

1. A tower, in particular for a wind turbine, comprising an upper tubular tower portion (2) and a lower lattice-like tower portion (5) having at least three support members (13), and comprising a transition piece (1) connecting the upper tower portion (2) to the lower tower portion (5), wherein the support members (13) in an upper support member portion have connection profiles (8) for connecting the support members (13) to the transition piece, and the support members (13) are arranged substantially around a vertical tower longitudinal axis (T), preferably rotationally symmetrically, wherein each of the support members (13) has at least two portions inclined relative to the perpendicular and in a first, upper of the portions (a1) encloses an angle α with the perpendicular, in a second, lower of the portions (a2) encloses an angle β with the perpendicular, and the angle β is smaller than the angle α, and wherein the transition piece (1) for connection of the upper tower portion to the lower tower portion has an upper connection element (6) for connecting the transition piece (1) to the upper tower portion (2),
**characterized in that**
the transition piece (1) for connection of the upper tower portion to the lower tower portion
has an inner lateral surface (3) widening upwardly in the form of a frustum of a cone and
comprises at least three outer connection faces (7), which are arranged on an outer side (4) of the transition piece (1) substantially rotationally symmetrically about a cone frustum longitudinal axis and at which the transition piece (1) is connected to one each of the support members (13),
wherein a cross-section of each of the connection profiles (8) changes continuously along an elongate extent along a connection profile longitudinal axis (L) of the connection profile (8).

2. The tower according to claim 1, **characterized in that** each of the support members (13), along its extent, has a third portion (a2') which is inclined relative to a perpendicular and in which each of the support members (13) encloses an angle β¹ with the perpendicular, wherein the second portion (a2) lies between the first portion (a1) and the third portion (a2') and the angle β¹ is smaller than the angle β.

3. The tower according to claim 2, **characterized in that** each of the support members (13), along its extent beneath the third portion (a2'), has at least one further, preferably n further portions inclined relative to a perpendicular by an angle β¹⁺ⁿ, wherein the angle β¹⁺ⁿ is smaller than the angle β¹⁺ⁿ⁻¹ of the portion arranged above and adjacently to the further portion.

4. The tower according to claim 3, **characterized in that** each of the support members (13) along its extent has a fourth portion which is inclined relative to a perpendicular and in which each of the support members (13) encloses an angle γ with the perpendicular, wherein the fourth portion lies above, preferably immediately above the first portion (a1) and the angle γ is smaller than the angle α.

5. The tower according to claim 4, **characterized in that** each of the support members (13) has, along its extent and above the fourth portion, at least one further, preferably n further portions inclined relative to a perpendicular by the angle γ¹⁺ⁿ, wherein the angle γ¹⁺ⁿ is smaller than an angle γ¹⁺ⁿ⁻¹ of a portion arranged beneath and adjacently to the further portion.

6. The tower according to any one of the preceding claims, **characterized in that** the tower has a total height (G) of at least 120 m, preferably at least 140 m, preferably at least 160 m.

7. The tower according to any one of the preceding claims, **characterized in that** the height of the lower, lattice-like tower portion (5) corresponds to at least three times, preferably at least four times a maximum longitudinal extent of the lower, lattice-like tower portion.

8. The tower according to any one of the preceding claims, **characterized in that** the support members (13) in an upper support member portion have connection profiles (8) for connection of the support members (13) to the transition piece (1), wherein each of the connection profiles (8), at a lower edge, is at a radial distance from the tower longitudinal axis of at least 4 m, preferably at least 8 m and/or at most 16 m.

9. The tower according to any one of the preceding claims, **characterized in that** a radial distance of the support members (13) from a tower longitudinal axis (T) at a lower edge of the lower, lattice-like tower portion is at least 5 m, preferably at least 10 m and/or at most 20 m.

10. The tower according to any one of the preceding claims, **characterized in that** a circumradius (Ru) through centroids of the support member cross-sectional areas at a lower end of the connection profiles (8') is at least 250%, preferably at least 350% of a circumradius of a shell middle plane at a lower edge of the upper, tubular tower cross-section.

11. The tower according to any one of the preceding claims, **characterized in that** the tower has a strip foundation (18) and/or individual foundations, which are arranged centrally beneath each of the support members (13).

12. The tower according to claim 11, **characterized in that** the strip foundation (18) has a radial extent of at least 9 m, preferably at least 12 m.

13. The tower according to any one of the preceding claims, **characterized in that** the upper tower portion (2) is formed as a supporting structure in the form of a shell and/or the lower tower portion (5) is formed as a supporting structure formed of rods.

14. The tower according to any one of the preceding claims, **characterized in that** the transition piece (1) has elongate shapings (9) on the outer side (4) between the connection faces (7), which shapings preferably extend from a top side of the transition piece (1) to a bottom side of the transition piece (1).

15. The tower according to any one of the preceding claims, **characterized in that** the transition piece (1) is formed integrally.

16. The tower according to any one of the preceding claims, **characterized in that** the cross-section of each of the connection profiles (8), along an elongate extent along a connection profile longitudinal axis (L) of the connection profile (8), decreases from top to bottom.

17. The tower according to any one of the preceding claims, **characterized in that** the support members (13) in an upper support member portion have connection profiles (8) for connection of the support members (13) to the transition piece, wherein each of the connection pieces (8), in a cross-section along a connection profile longitudinal axis (L), has an outer contour running, preferably continuously, from top to bottom along an elongate extent and having a turning point.

## Revendications

1. Tour, en particulier pour une installation éolienne, comprenant une section de tour tubulaire supérieure (2) et une section de tour inférieure sous forme de grille (5) comprenant au moins trois éléments porteurs (13) et une pièce de transition (1) reliant la section de tour supérieure (2) à la section de tour inférieure (5), les éléments porteurs (13) comprenant dans une section supérieure des éléments porteurs des profils de jonction (8) reliant les éléments porteurs (13) à la pièce de transition et les éléments porteurs (13) étant disposés essentiellement autour d'un axe vertical longitudinal (T) de la tour de préférence symétriques en rotation, chacun des éléments porteurs (13) comprenant au moins deux sections inclinées par rapport à la perpendiculaire et comprenant dans une première section supérieure des sections (a1) un angle α avec la perpendiculaire, dans une deuxième section inférieure des sections (a2) un angle β avec la perpendiculaire, l'angle β étant plus petit que l'angle α, la pièce de transition (1) comprenant un élément de jonction supérieur (6) pour relier la pièce de transition (1) à la section supérieure de la tour (2), pour relier la section supérieure de la tour à la section inférieure de la tour,
**caractérisée en ce que**
la pièce de transition (1) comprend, pour relier la section supérieure de la tour à la section inférieure de la tour, une face intérieure de l'enveloppe (3) s'évasant sous forme conique vers le haut, et au moins trois surfaces de liaison extérieures (7) disposées essentiellement de manière symétrique en rotation autour d'un axe longitudinal tronconique sur une face extérieure (4) de la pièce de transition (1) et sur lesquelles la pièce de transition (1) est reliée à l'un des éléments porteurs (13) respectivement,
une section transversale de chacun des profils de jonction (8) variant en continu le long d'une étendue longitudinale le long d'un axe longitudinal de profil de jonction (L) du profil de jonction (8).

2. Tour selon la revendication 1, **caractérisée en ce que** chacun des éléments porteurs (13) présente le long de son étendue une troisième section (a2') inclinée par rapport à une perpendiculaire, dans laquelle chacun des éléments porteurs (13) comprend un angle β¹ avec la perpendiculaire, la deuxième section (a2) étant située entre la première (a1) et la troisième section (a2') et l'angle β¹ étant plus petit que l'angle β.

3. Tour selon la revendication 2, **caractérisée en ce que** chacun des éléments porteurs (13) présente le long de son étendue au-dessous de la troisième section (a2') au moins une autre section, de préférence n autres sections, inclinées par rapport à une perpendiculaire d'un angle β¹⁺ⁿ, l'angle β¹⁺ⁿ étant plus petit que l'angle β¹⁺ⁿ⁻¹ de la section respectivement au-dessus de l'autre section adjacente.

4. Tour selon la revendication 3, **caractérisée en ce que** chacun des éléments porteurs (13) présente le long de son étendue une quatrième section inclinée par rapport à une perpendiculaire, dans laquelle chacun des éléments porteurs (13) comprend un angle γ avec la perpendiculaire, la quatrième section étant située au-dessus, de préférence immédiatement au-dessus de la première section (a1) et l'angle γ étant plus petit que l'angle α.

5. Tour selon la revendication 4, **caractérisée en ce que** chacun des éléments porteurs (13) présente le long de son étendue au-dessus de la quatrième section au moins une section supplémentaire, de préférence n autres sections inclinées par rapport à une perpendiculaire par rapport à l'angle γ¹⁺ⁿ, l'angle γ¹⁺ⁿ étant plus petit qu'un angle γ¹⁺ⁿ⁻¹ d'une section respectivement adjacente au-dessous de la section supplémentaire.

6. Tour selon l'une des revendications précédentes, **caractérisée en ce que** la tour a une hauteur totale (G) d'au moins 120 m, préférablement d'au moins 140 m, et plus préférablement d'au moins 160 m.

7. Tour selon l'une des revendications précédentes, **caractérisée en ce que** la hauteur de la section inférieure (5) de la tour en grille correspond à au moins un triple, préférablement à au moins un quadruple d'une étendue latérale maximale de la section inférieure de la tour en grille.

8. Tour selon l'une des revendications précédentes, **caractérisée en ce que** les éléments porteurs (13) comprennent dans une section supérieure des éléments porteurs des profils de jonction (8) pour relier les éléments porteurs (13) à la pièce de transition (1), chacun des profils de jonction (8) présentant, à un bord inférieur, une distance radiale de l'axe longitudinal de la tour d'au moins 4 m, de préférence d'au moins 8 m et/ou maximum de 16 m.

9. Tour selon l'une des revendications précédentes, **caractérisée en ce qu'**une distance radiale des éléments porteurs (13) par rapport à un axe longitudinal (T) de la tour est d'au moins 5 m, de préférence d'au moins 10 m, et/ou au maximum de 20 m sur un bord inférieur de la section inférieure en grille de la tour.

10. Tour selon l'une des revendications précédentes, **caractérisée en ce qu'**un rayon circonférentiel (Ru) dû aux centres de gravité des surfaces de section des éléments porteurs est sur une extrémité inférieure des profils de jonction (8') d'au moins 250%, de préférence d'au moins 350%, d'un rayon circonférentiel d'une surface centrale de coque sur un bord inférieur de la section tubulaire supérieure de la tour.

11. Tour selon l'une des revendications précédentes, **caractérisée en ce que** la tour présente une fondation en bande (18) et/ou des fondations individuelles qui sont disposées respectivement au centre au-dessous des éléments porteurs (13).

12. Tour selon la revendication 11, **caractérisée en ce que** la fondation en bandes (18) présente une étendue radiale d'au moins 9 m, de préférence d'au moins 12 m.

13. Tour selon l'une des revendications précédentes, **caractérisée en ce que** la section supérieure (2) de la tour est conçue comme une structure porteuse à coques et/ou la section inférieure (5) de la tour est conçue comme une structure porteuse à poutres.

14. Tour selon l'une des revendications précédentes, **caractérisée en ce que** la pièce de transition (1) présente sur la face extérieure (4) entre les surfaces de liaison (7) des formations allongées (9), qui s'étendent de préférence depuis une face supérieure de la pièce de transition (1) jusqu'à une face inférieure de la pièce de transition (1).

15. Tour selon l'une des revendications précédentes, **caractérisée en ce que** la pièce de transition (1) est formée d'une seule pièce.

16. Tour selon l'une des revendications précédentes, **caractérisée en ce que** la section transversale de chacun des profils de jonction (8) diminue le long d'une étendue longitudinale le long d'un axe longitudinal de profil de jonction (L) du profil de jonction (8) du haut vers le bas.

17. Tour selon l'une des revendications précédentes, **caractérisée en ce que** les éléments porteurs (13) dans une section supérieure d'élément de support présentent des profils de jonction (8) pour relier les éléments porteurs (13) à la pièce de transition, chacun des profils de jonction (8) présentant dans une section transversale le long d'un axe longitudinal de profil de jonction (L) un contour extérieur continu, de préférence de forme allongée, de haut en bas avec un point tournant.
